# EUROPEAN PATENT APPLICATION

(11) **EP 3 879 864 A1**
(43) Date of publication of application: **15.09.2021**
(21) Application number: 19882751.1
(22) Date of filing: 28.10.2019
(51) Int. Cl.: H04W 8/20

(54) **TERMINAL CAPABILITY INDICATING METHOD, TERMINAL CAPABILITY IDENTIFICATION INDICATING METHOD, TERMINAL CAPABILITY OBTAINING METHOD, TERMINAL CAPABILITY IDENTIFICATION OBTAINING METHOD, AND COMMUNICATION DEVICE**

(30) Priority: 09.11.2018 CN 201811333767
(71) Applicant: VIVO MOBILE COMMUNICATION CO., LTD., Dongguan, Guangdong 523860 (CN)
(72) Inventor: KE, Xiaowan, Dongguan, Guangdong 523860 (CN)
(74) Representative: Lavoix
(86) International application number: PCT/CN2019/113592
(87) International publication number: WO 2020/093891

(57) **Abstract**

Some embodiments of this disclosure provide a method for indicating a terminal capability, a method for obtaining a terminal capability, a method for indicating a capability identifier, a method for obtaining a capability identifier, and a communications device. The indication method includes: transmitting first information, where the first information includes at least one of the following: first capability identification information, first indication information, and second indication information.

## Description

### CROSS-REFERENCE TO RELATED APPLICATIONS

This application claims priority to Chinese Patent Application No. 201811333767.0, filed in China on November 9th, 2018, which is incorporated herein by reference in its entirety.

### TECHNICAL FIELD

Some embodiments of this disclosure relate to the field of wireless communication technologies, and in particular, to a method for indicating a terminal capability, a method for obtaining a terminal capability, a method for indicating a capability identifier, a method for obtaining a capability identifier, and a communications network element.

### BACKGROUND

In order that a core network (Core Network, CN) element or a radio access network (Radio Access Network, RAN) element obtains a terminal capability, a terminal needs to report the terminal capability to the CN element or the RAN element, or the terminal capability is transmitted between communications network elements. However, with evolution of communications systems, transmission of terminal capabilities results in increasingly large overheads because the terminal needs to support increasing capabilities. Therefore, how to reduce the overheads resulting from transmission of terminal capabilities is a problem that needs to be resolved.

### SUMMARY

Some embodiments of this disclosure provide a method for indicating a terminal capability, a method for obtaining a terminal capability, a method for indicating a capability identifier, a method for obtaining a capability identifier, and a communications device, so as to reduce overheads resulting from transmission of terminal capabilities.

In order to resolve the foregoing technical problem, this disclosure is implemented as follows:

According to a first aspect, some embodiments of this disclosure provide a method for indicating a terminal capability, applied to a first communications network element and including:
transmitting first information to a second communications network element, where the first information includes at least one of the following: first capability identification information, first indication information, and second indication information; where
the first capability identification information is terminal capability identification information of a first terminal; and
the first indication information is used to indicate whether a terminal capability mapped to the first capability identification information is present, or the first indication information is used to indicate that a terminal capability mapped to the first capability identification information is present, or the first indication information is used to indicate that a terminal capability mapped to the first capability identification information is absent; and the second indication information is used to indicate whether a terminal capability of the first terminal is present, or the second indication information is used to indicate that a terminal capability of the first terminal is present, or the second indication information is used to indicate that a terminal capability of the first terminal is absent.

According to a second aspect, some embodiments of this disclosure provide a method for obtaining a terminal capability, applied to a second communications network element and including:
obtaining first information from a first communications network element, where the first information includes at least one of the following: first capability identification information, first indication information, and second indication information; where
the first capability identification information is terminal capability identification information of a first terminal; the first indication information is used to indicate whether a terminal capability mapped to the first capability identification information is present, or the first indication information is used to indicate that a terminal capability mapped to the first capability identification information is present, or the first indication information is used to indicate that a terminal capability mapped to the first capability identification information is absent; and the second indication information is used to indicate whether a terminal capability of the first terminal is present, or the second indication information is used to indicate that a terminal capability of the first terminal is present, or the second indication information is used to indicate that a terminal capability of the first terminal is absent; and
obtaining the terminal capability of the first terminal based on the first information.

According to a third aspect, some embodiments of this disclosure provide a first communications network element, including:
a transmitting module, configured to transmit first information to a second communications network element, where the first information includes at least one of the following: first capability identification information, first indication information, and second indication information; where
the first capability identification information is terminal capability identification information of a first terminal; and
the first indication information is used to indicate whether a terminal capability mapped to the first capability identification information is present, or the first indication information is used to indicate that a terminal capability mapped to the first capability identification information is present, or the first indication information is used to indicate that a terminal capability mapped to the first capability identification information is absent; and the second indication information is used to indicate whether a terminal capability of the first terminal is present, or the second indication information is used to indicate that a terminal capability of the first terminal is present, or the second indication information is used to indicate that a terminal capability of the first terminal is absent.

According to a fourth aspect, some embodiments of this disclosure provide a second communications network element, including:
a first obtaining module, configured to obtain first information from a first communications network element, where the first information includes at least one of the following: first capability identification information, first indication information, and second indication information; where
the first capability identification information is terminal capability identification information of a first terminal; the first indication information is used to indicate whether a terminal capability mapped to the first capability identification information is present, or the first indication information is used to indicate that a terminal capability mapped to the first capability identification information is present, or the first indication information is used to indicate that a terminal capability mapped to the first capability identification information is absent; and the second indication information is used to indicate whether a terminal capability of the first terminal is present, or the second indication information is used to indicate that a terminal capability of the first terminal is present, or the second indication information is used to indicate that a terminal capability of the first terminal is absent; and
a second obtaining module, configured to obtain the terminal capability of the first terminal based on the first information.

According to a fifth aspect, some embodiments of this disclosure provide a first communications network element, including a processor, a memory, and a computer program stored in the memory and capable of running on the processor. When the computer program is executed by the processor, the steps of the method for indicating a terminal capability described above are implemented.

According to a sixth aspect, some embodiments of this disclosure provide a second communications network element, including a processor, a memory, and a computer program stored in the memory and capable of running on the processor. When the computer program is executed by the processor, the steps of the method for obtaining a terminal capability described above are implemented.

According to a seventh aspect, some embodiments of this disclosure provide a method for indicating a terminal capability identifier, applied to a third communications device and including:
transmitting third indication information, where the third indication information is used to indicate whether first capability identification information is present; and
the first capability identification information is terminal capability identification information of a first terminal.

According to an eighth aspect, some embodiments of this disclosure provide a method for obtaining a terminal capability identifier, applied to a fourth communications network element and including:
obtaining third indication information, where the third indication information is used to indicate whether first capability identification information is present, and the first capability identification information is terminal capability identification information of a first terminal; and
determining, based on the third indication information, whether to obtain the first capability identification information or whether to allocate capability identification information to the first terminal.

According to a ninth aspect, some embodiments of this disclosure provide a third communications device, including:
a transmitting module, configured to transmit third indication information, where the third indication information is used to indicate whether first capability identification information is present; and
the first capability identification information is terminal capability identification information of a first terminal.

According to a tenth aspect, some embodiments of this disclosure provide a fourth communications network element, including:
an obtaining module, configured to obtain third indication information, where the third indication information is used to indicate whether first capability identification information is present, and the first capability identification information is terminal capability identification information of a first terminal; and
a determining module, configured to determine, based on the third indication information, whether to obtain the first capability identification information or whether to allocate capability identification information to the first terminal.

According to an eleventh aspect, some embodiments of this disclosure provide a third communications device, including a processor, a memory, and a computer program stored in the memory and capable of running on the processor. When the computer program is executed by the processor, the steps of the method for indicating a terminal capability identifier applied to the third communications device are implemented.

According to a twelfth aspect, some embodiments of this disclosure provide a fourth communications network element, including a processor, a memory, and a computer program stored in the memory and capable of running on the processor. When the computer program is executed by the processor, the steps of the method for indicating a terminal capability identifier applied to the fourth communications network element are implemented.

According to a thirteenth aspect, some embodiments of this disclosure provide a computer-readable storage medium, where the computer-readable storage medium stores a computer program, and when the computer program is executed by a processor, the steps of the method for indicating a terminal capability are implemented, or when the computer program is executed by a processor, the steps of the method for obtaining a terminal capability are implemented, or when the computer program is executed by a processor, the steps of the method for indicating a terminal capability identifier are implemented, or when the computer program is executed by a processor, the steps of the method for obtaining a terminal capability identifier are implemented.

According to some embodiments of this disclosure, the first communications network element transmits the first information related to the terminal capability, so that a communications network element receiving the first information can choose, based on the first information, whether to obtain the terminal capability from the first communications network element or from a terminal, thereby avoiding signaling overheads resulting from failed attempts in obtaining the terminal capability from the first communications network element, or avoiding always obtaining the terminal capability from the terminal, so as to reduce the frequency of obtaining the terminal capability at an air interface and reduce signaling overheads for transmitting the terminal capability.

### BRIEF DESCRIPTION OF DRAWINGS

Other advantages and benefits will become apparent to those of ordinary skill in the art by reading the following detailed descriptions of optional implementations. The accompanying drawings are merely intended to illustrate the purposes of the optional implementations, and should not be construed as a limitation on this disclosure. Throughout the accompanying drawings, the same reference numerals represent the same components. In the accompanying drawings:
FIG. 1 is a schematic flowchart of a method for indicating a terminal capability according to some embodiments of this disclosure;
FIG. 2 is a schematic flowchart of a method for obtaining a terminal capability according to some embodiments of this disclosure;
FIG. 3 is a schematic flowchart of a communication method in a first scenario according to some embodiments of this disclosure;
FIG 4 is a schematic flowchart of a communication method in a second scenario according to some embodiments of this disclosure;
FIG. 5 is a schematic structural diagram of a first communications network element according to some embodiments of this disclosure;
FIG. 6 is a schematic structural diagram of a second communications network element according to some embodiments of this disclosure;
FIG. 7 is a schematic structural diagram of a first communications network element according to some other embodiments of this disclosure;
FIG. 8 is a schematic structural diagram of a second communications network element according to some other embodiments of this disclosure;
FIG. 9 is a schematic flowchart of a method for indicating a terminal capability identifier according to some other embodiments of this disclosure;
FIG. 10 is a schematic flowchart of a method for obtaining a terminal capability identifier according to some other embodiments of this disclosure;
FIG. 11 is a schematic flowchart of a communication method in a third scenario according to some embodiments of this disclosure;
FIG 12 is a schematic flowchart of a communication method in a fourth scenario according to some embodiments of this disclosure;
FIG. 13 is a schematic flowchart of a communication method in a fifth scenario according to some embodiments of this disclosure;
FIG. 14 is a schematic structural diagram of a third communications device according to some embodiments of this disclosure;
FIG 15 is a schematic structural diagram of a fourth communications network element according to some embodiments of this disclosure;
FIG. 16 is a schematic structural diagram of a third communications device according to another embodiment of this disclosure; and
FIG 17 is a schematic structural diagram of a fourth communications network element according to another embodiment of this disclosure.

### DESCRIPTION OF EMBODIMENTS

In order to reduce the frequency of obtaining terminal capabilities at an air interface and reduce signaling overheads for transmitting the terminal capabilities, some embodiments of this disclosure provide a method for indicating a terminal capability, a method for obtaining a terminal capability, and a communications device. Specifically, when a radio access network (Radio Access Network, RAN) does not know a mapped radio capability indicated by first capability identification information, the RAN obtains the terminal capability from a terminal. However, if a CN element has already obtained the terminal capability, obtaining the terminal capability from the terminal surely increases signaling overheads at a UU interface (an interface between the terminal and a base station). The CN element does not necessarily have the terminal capability mapped to the first capability identification information. If the RAN element blindly requests the terminal capability from the CN element, unnecessary signaling overheads are caused when the CN does not have the terminal capability. When the CN element has the terminal capability, always transmitting the terminal capability to the RAN element by the CN element results in unnecessary signaling overheads at an NG interface (an interface between the core network and the base station) because the RAN element may already have the terminal capability mapped to the first capability identification information.

In addition, transmitting a terminal capability identifier by the terminal every time the terminal accesses a network leads to overheads at the air interface, especially when the network has stored the terminal capability identifier. In a deployment mode, not all RAN elements support a function of terminal capability identification information. When the terminal moves from a RAN element supporting the function to a RAN element not supporting the function, and then moves back to the RAN element supporting the function, the terminal does not know that the network may have lost the terminal capability identification information of the terminal. Therefore, transmitting the terminal capability identification information only once by the terminal is neither applicable. In order to further optimize terminal capability signaling and reduce the signaling overheads for transmitting the terminal capability identification information, some embodiments of this disclosure provide a method for indicating a terminal capability, a method for obtaining a terminal capability, and a communications device. Specifically, when the terminal reports the first capability identification information of the terminal to the communications network element, if the communications network element has already obtained the first capability identification information, obtaining the first capability identification information from the terminal undoubtedly increases the signaling overheads.

Minimizing the overheads for transmitting the terminal capability at an interface (including the NG and UU interfaces) is the problem to be resolved in this disclosure.

First, it should be noted that capabilities of the terminal may be classified into radio capabilities of the terminal and core network capabilities of the terminal. For the radio capability, the terminal may report the radio capability of the terminal based on a request of the network. For the core network capability, the terminal may report the network capability of the terminal during registration.

The terminal can support a plurality of bands (Band) and frequencies (frequency). With the introduction of technologies such as carrier aggregation (Carrier Aggregation, CA) and dual connectivity (Dual Connectivity, DC), various possible band combinations need to be arranged and combined, and band combinations supported by various terminal manufacturers may be different, resulting in an extremely large quantity of radio capabilities. In addition, with evolution of the network, an increasing quantity of features is introduced into the network, and different features usually require different radio capabilities and network capabilities. For a related network feature, the terminal needs to inform the network of information about whether the feature is supported.

In some embodiments of this disclosure, identification information of the terminal capability (which may be simply referred to as terminal capability identification information) may be used to identify the terminal capability. There is a one-to-one mapping relationship between the terminal capability identification information and terminal capability information, and the terminal capability may be obtained through mapping based on the terminal capability identification information. A group of terminal capabilities or complete terminal capabilities may be obtained through mapping based on the terminal capability identification information. A size of the terminal capability identification information is smaller than that of the terminal capability, thereby reducing capability signaling.

Optionally, one terminal may have one or more pieces of terminal capability identification information.

In some embodiments of this disclosure, the terminal capability may include at least one of the following: the core network capability of the terminal and the radio capability of the terminal. The core network capability of the terminal may also be referred to as a terminal network capability or a non-access stratum (Non-access stratum, NAS) capability.

Optionally, the radio capability of the terminal may include at least one of the following: a carrier aggregation CA capability and a dual connectivity DC capability. The carrier aggregation CA capability may be supporting a band and/or band combination of carrier aggregation. The dual connectivity DC capability may be supporting a band and/or band combination of the dual connectivity DC capability.

Optionally, the core network capability of the terminal may include at least one of the following: a 5G session management capability, a 5G mobility management capability, a user terminal network capability (UE Network capability), a mobile station network capability (MS Network capability), and so on.

Optionally, the network capability of the terminal may include at least one of the following: a 5G network capability, a 4G network capability (such as UE Network capability), a 3G network capability (such as MS Network capability), and so on.

In some embodiments of this disclosure, "capability" and "terminal capability" may mean the same, and may be used interchangeably. The terminal capability may be a terminal capability set (or referred to as a terminal capability collection). Therefore, "capability set", "capability collection", "capability", "terminal capability set", "terminal capability collection", and "terminal capability" may mean the same.

In some embodiments of this disclosure, the terminal capability identifier may be understood as current terminal capability identification information. The current terminal capability identifier may be understood as at least one of the following: terminal capability identification information corresponding to the current terminal capability, valid terminal capability identification information, a latest terminal capability identifier, a latest terminal capability identifier transmitted by the terminal to the network, and latest terminal capability identification information allocated by the network.

In some embodiments of this disclosure, a terminal capability context may also be referred to as description information of the terminal capability, and may be used to describe a specific capability.

In some embodiments of this disclosure, "capability identification information", "terminal capability identification information" and "identification information of the terminal capability" may mean the same, and may be used interchangeably.

In some embodiments of this disclosure, terminal capability signaling optimization may include radio capability signaling optimization and non-access stratum capability signaling optimization. Optionally, radio capability signaling optimization may also be referred to as optimizations on UE radio capability signaling, or referred to as RACS for short. However, it should be noted that the standards organization may provide other names, and naming does not constitute any limitation on some embodiments of this disclosure.

Optionally, obtaining may be understood as acquiring from configuration, receiving, obtaining through receiving upon a request, obtaining through self-learning, obtaining through deduction based on non-received information, or obtaining through processing received information, which may be determined according to actual needs. This is not limited in some embodiments of this disclosure. For example, when specific capability indication information transmitted by a device is not received, it can be deduced that the device does not support the capability.

Optionally, transmitting may include broadcasting, broadcasting by using a system message, or returning a response after receiving the request.

In some embodiments of this disclosure, a registration request may include one of the following: an attach request, a location update request, a mobility registration request, and an initial registration request.

In some embodiments of this disclosure, a deregistration request may include one of the following: a detach request.

In order to reduce overheads resulting from capability reporting, information that can indicate the terminal capability is set for the terminal. A method for terminal capability signaling optimization is that the terminal reports, to the network, only the information indicating the terminal capability. The network obtains a capability of the terminal through mapping based on the identification information indicating the terminal capability.

In some embodiments of this disclosure, the communications device includes at least one of the following: a terminal and a communications network element.

In some embodiments of this disclosure, the network element may be one of the following: a physical device, a network function entity, a network element, and a network-side network element.

In some embodiments of this disclosure, the communications network element may include at least one of the following: a RAN (Radio Access Network, radio access network) element and a CN (Core Network, core network) element.

In some embodiments of this disclosure, the core network element (CN element) may include but is not limited to at least one of the following: a core network device, a core network node, a core network function, a core network element, a mobility management entity (Mobility Management Entity, MME), an access mobility management function (Access Management Function, AMF), a session management function (Session Management Function, SMF), a user plane function (User Plane Function, UPF), a serving gateway (serving GW, SGW), a PDN gateway (PDN Gate Way, PDN gateway), a policy control function (Policy Control Function, PCF), a policy and charging rules function unit (Policy and Charging Rules Function, PCRF), a GPRS service support node (Serving GPRS Support Node, SGSN), a gateway GPRS support node (Gateway GPRS Support Node, GGSN), or a radio access network device.

In some embodiments of this disclosure, the radio access network element (RAN element) may include but is not limited to at least one of the following: a radio access network device, a radio access network node, a radio access network function, a radio access network element, a 3GPP radio access network, a non-3GPP radio access network, a centralized unit (Centralized Unit, CU), a distributed unit (Distributed Unit, DU), a base station, an evolved Node B (evolved Node B, eNB), a 5G base station (gNB), a radio network controller (Radio Network Controller, RNC), a Node B (NodeB), a non-3GPP interworking function (Non-3GPP InterWorking Function, N3IWF), an access controller (Access Controller, AC) node, an access point (Access Point, AP) device, or a wireless local area network (Wireless Local Area Networks, WLAN) node.

A base station may be a base transceiver station (BTS, Base Transceiver Station) in GSM or CDMA, or may be a NodeB (NodeB) in WCDMA, or may be an evolved NodeB (eNB or e-Node B, evolutional Node B) in LTE, or a 5G NodeB (gNB), which is not limited in some embodiments of this disclosure.

In some embodiments of this disclosure, the network-side network element may include at least one of the following: a CN element and a RAN element.

In some embodiments of this disclosure, the terminal may include a relay supporting terminal functions. The terminal may also be referred to as a terminal device or user equipment (User Equipment, UE). The terminal may be a terminal-side device such as a mobile phone, a tablet computer (Tablet Personal Computer), a laptop computer (Laptop Computer), a personal digital assistant (Personal Digital Assistant, PDA), a mobile Internet device (Mobile Internet Device, MID), a wearable device (Wearable Device), or a vehicle-mounted device. It should be noted that a specific type of the terminal is not limited in some embodiments of this disclosure.

In some embodiments of this disclosure, it should be noted that capability information elements (IE) are separately defined for a capability signaling optimization capability of the terminal and other terminal capabilities. The terminal reports the capability signaling optimization capability, and the network may determine, based on the capability signaling optimization capability, whether to allocate capability identification information or to obtain capability identification information from the terminal.

The following clearly and completely describes the technical solutions in some embodiments of this disclosure with reference to the accompanying drawings in some embodiments of this disclosure. Apparently, the described embodiments are some but not all of the embodiments of this disclosure. All other embodiments obtained by a person of ordinary skill in the art based on the embodiments of this disclosure without creative efforts shall fall within the protection scope of this disclosure.

The term "include" or any of its variants in the specification and claims of this application is intended to cover a non-exclusive inclusion, such that a process, a method, a system, a product, or a device that includes a series of steps or units not only includes those expressly listed steps or units but also includes other steps or units that are not expressly listed, or further includes elements inherent to such process, method, system, product, or device. In addition, in the specification and claims, the use of "and/or" represents presence of at least one of the connected objects, for example, "A and/or B" indicates the following three cases: A alone, B alone, or both A and B.

In some embodiments of this disclosure, words such as "an example" or "for example" are used to represent an example, an instance, or an illustration. Any embodiment or design scheme described as "an example" or "for example" in some embodiments of this disclosure should not be construed as being more preferable or advantageous than other embodiments or design schemes. To be precise, the terms such as "an example" or "for example" are intended to present a related concept in a specific manner.

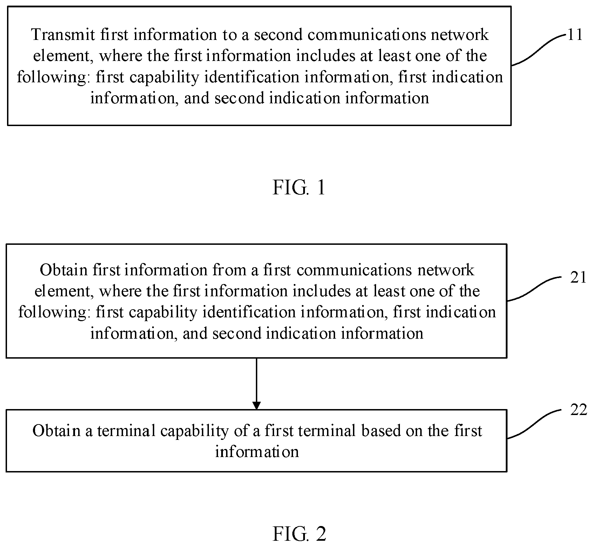

Referring to FIG 1, FIG 1 is a schematic flowchart of a method for indicating a terminal capability according to some embodiments of this disclosure. The method is applied to a first communications network element and includes the following step.

Step 11: Transmit first information to a second communications network element, where the first information includes at least one of the following: first capability identification information, first indication information, and second indication information.

The first capability identification information is terminal capability identification information of a first terminal.

The first indication information is used to indicate whether a terminal capability mapped to the first capability identification information is present, or the first indication information is used to indicate that a terminal capability mapped to the first capability identification information is present, or the first indication information is used to indicate that a terminal capability mapped to the first capability identification information is absent; and the second indication information is used to indicate whether a terminal capability of the first terminal is present, or the second indication information is used to indicate that a terminal capability of the first terminal is present, or the second indication information is used to indicate that a terminal capability of the first terminal is absent.

In some embodiments of this disclosure, capability identification information of a terminal (which may be simply referred to as capability identification information) may be used to identify a terminal capability. There is a mapping relationship between the capability identification information of the terminal and the terminal capability, and the terminal capability may be obtained through mapping based on the capability identification information of the terminal. A group of terminal capabilities or complete terminal capabilities may be obtained through mapping based on the capability identification information of the terminal. A size of the capability identification information of the terminal is smaller than that of the terminal capability, thereby reducing capability signaling. Optionally, one terminal may have one or more pieces of capability identification information.

In some embodiments of this disclosure, that the first indication information is used to indicate whether a terminal capability mapped to the first capability identification information is present may be used to indicate whether the first communications network element has the terminal capability mapped to the first capability identification information. Certainly, it may alternatively be that the first communications network element does not have the terminal capability mapped to the first capability identification information, but may obtain, from another network element, the terminal capability mapped to the first capability identification information, which may also be referred to that the terminal capability mapped to the first capability identification information is present.

In some embodiments of this disclosure, that the second indication information is used to indicate whether the terminal capability of the first terminal is present may be used to indicate whether the first communications network element has the terminal capability of the first terminal. Certainly, it may alternatively be that the first communications network element does not have the terminal capability of the first terminal, but may obtain the terminal capability of the first terminal from another network element, which may also be referred to that the terminal capability of the first terminal is present.

In some embodiments of this disclosure, the first information may merely include one of the first indication information and the second indication information, that is, optionally, the first information may include any one of the following three types:
the first capability identification information of the first terminal and the first indication information;
the first capability identification information of the first terminal and the second indication information; and
the second indication information

As described in the foregoing content, one terminal may have one or more pieces of capability identification information. To be specific, the first capability identification information may include one piece of terminal capability identification information of the first terminal, or may include at least two pieces of terminal capability identification information of the first terminal.

In some embodiments of this disclosure, when the first capability identification information includes one piece of terminal capability identification information of the first terminal, the first indication information is used to indicate whether a terminal capability mapped to the first capability identification information is present, or the first indication information is used to indicate that a terminal capability mapped to the first capability identification information is present, or the first indication information is used to indicate that a terminal capability mapped to the first capability identification information is absent. For example, when the first indication information is used to indicate whether the terminal capability mapped to the first capability identification information is present, the first indication information may be represented by one bit. For example, 1 indicates that the terminal capability mapped to the first capability identification information is present, and 0 indicates that the terminal capability mapped to the first capability identification information is absent; or 0 indicates that the terminal capability mapped to the first capability identification information is present, and 1 indicates that the terminal capability mapped to the first capability identification information is absent. When the first indication information is used to indicate that the terminal capability mapped to the first capability identification information is present, the first indication information may be represented by one bit, for example, 1 or 0 is used to indicate that the terminal capability mapped to the first capability identification information is present. When the first indication information is used to indicate that the terminal capability mapped to the first capability identification information is absent, the first indication information may be represented by one bit, for example, 1 or 0 is used to indicate that the terminal capability mapped to the first capability identification information is absent. It should be noted that how many bits specifically used for representing the first indication information is not specifically limited in this embodiment.

In some embodiments of this disclosure, when the first capability identification information includes at least two pieces of terminal capability identification information of the first terminal, and each first indication information is used to indicate whether a corresponding terminal capability mapped to the first capability identification information is present, and the first capability identification information is in one-to-one correspondence to the first indication information. For example, the first capability identification information includes two pieces of terminal capability identification information (an identifier 1 and an identifier 2) of the first terminal, and the first capability identification information also includes first indication information 1 corresponding to the identifier 1 and first indication information 2 corresponding to the identifier 2. The first indication information 1 is used to indicate whether a terminal capability mapped to the identifier 1 is present, and the first indication information 2 is used to indicate whether a terminal capability mapped to the identifier 2 is present. In this embodiment, the first indication information may be represented by one bit, for example, 1 indicates that the terminal capability mapped to the first capability identification information is present, and 0 indicates that the terminal capability mapped to the first capability identification information is absent; or 0 indicates that the terminal capability mapped to the first capability identification information is present, and 1 indicates that the terminal capability mapped to the first capability identification information is absent.

In some embodiments of this disclosure, when the first indication information is used to indicate that the terminal capability mapped to the first capability identification information is absent, the second capability identification information is in one-to-one correspondence to the first indication information. The second capability identification information is terminal capability identification information of a mapped terminal capability that is absent in the first capability identification information. That is, the first indication information merely indicates terminal capability identification information of a mapped terminal capability that is absent, but does not indicate terminal capability identification information of a mapped terminal capability that is present. If the first information has the first indication information corresponding to the first capability identification information, another communications network element receiving the first capability identification information considers that the first communications network element does not have or cannot obtain the terminal capability mapped to the first capability identification information. If the first information does not have the first indication information corresponding to the first capability identification information, another communications network element receiving the first capability identification information considers by default that the first communications network element has or can obtain the terminal capability mapped to the first capability identification information, thereby further reducing overheads. For example, the first capability identification information includes two pieces of terminal capability identification information (an identifier 1 and an identifier 2) of the first terminal. The first communications network element has or can obtain a terminal capability mapped to the identifier 1, but does not have or cannot obtain a terminal capability mapped to the identifier 2. In this case, the first information includes only one piece of first indication information, and the first indication information indicates that the terminal capability mapped to the identifier 2 is absent.

In some embodiments of this disclosure, when the first indication information is used to indicate that the terminal capability mapped to the first capability identification information is present, third capability identification information is in one-to-one correspondence to the first indication information. The third capability identification information is terminal capability identification information of a mapped terminal capability that is present in the first capability identification information. That is, the first indication information merely indicates terminal capability identification information of a mapped terminal capability that is present, but does not indicate terminal capability identification information of a mapped terminal capability that is absent. If the first information has the first indication information corresponding to the first capability identification information, another communications network element receiving the first capability identification information considers that the first communications network element has or can obtain the terminal capability mapped to the first capability identification information. If the first information does not have the first indication information corresponding to the first capability identification information, another communications network element receiving the first capability identification information considers by default that the first communications network element does not have or cannot obtain the terminal capability mapped to the first capability identification information, thereby further reducing overheads. For example, the first capability identification information includes two pieces of terminal capability identification information (an identifier 1 and an identifier 2) of the first terminal. The first communications network element has or can obtain a terminal capability mapped to the identifier 1, but does not have or cannot obtain a terminal capability mapped to the identifier 2. In this case, the first information includes only one piece of first indication information, and the first indication information indicates that the terminal capability mapped to the identifier 1 is present.

In some embodiments of this disclosure, when the first indication information is used to indicate that the terminal capability mapped to the first capability identification information is present, and the third capability identification information includes at least two pieces of terminal capability identification information of the first terminal, all the third capability identification information corresponds to one piece of first indication information, and the third capability identification information is terminal capability identification information of a mapped terminal capability that is present in the first capability identification information. For example, the first capability identification information includes three pieces of terminal capability identification information (an identifier 1, an identifier 2, and an identifier 3) of the first terminal. The first communications network element has or can obtain terminal capabilities mapped to the identifier 1 and the identifier 3, but does not have or cannot obtain a terminal capability mapped to the identifier 2. In this case, the first information includes only one piece of first indication information used for indicating that the terminal capabilities mapped to the identifier 1 and the identifier 3 are present, thereby further reducing overheads. Specifically, in an information structure of the first information, a terminal capability identification information list is provided after the first indication information, and all terminal capability identification information in the terminal capability identification information list are terminal capability identification information of mapped terminal capabilities that are present. However, terminal capability identification information excluded in the list is considered by default to be terminal capability identification information of mapped terminal capabilities that are absent.

In some embodiments of this disclosure, when the first indication information is used to indicate that the terminal capability mapped to the first capability identification information is absent, and the second capability identification information includes at least two pieces of terminal capability identification information of the first terminal, all the second capability identification information corresponds to one piece of first indication information, and the second capability identification information is terminal capability identification information of a mapped terminal capability that is absent in the first capability identification information. For example, the first capability identification information includes four pieces of terminal capability identification information (an identifier 1, an identifier 2, an identifier 3, and an identifier 4) of the first terminal. The first communications network element has or can obtain terminal capabilities mapped to the identifier 1 and the identifier 3, but does not have or cannot obtain terminal capabilities mapped to the identifier 2 and the identifier 4. In this case, the first information includes only one piece of first indication information used for indicating that the terminal capabilities mapped to the identifier 2 and the identifier 4 are present, thereby further reducing overheads. Specifically, in an information structure of the first information, a terminal capability identification information list is provided after the first indication information, and all terminal capability identification information in the terminal capability identification information list are terminal capability identification information of mapped terminal capabilities that are absent. However, terminal capability identification information excluded in the list is considered by default to be terminal capability identification information of mapped terminal capabilities that are present.

In some embodiments of this disclosure, before transmitting the first information, the first communications network element may further perform at least one of the following:
(01) receiving the first capability identification information that is reported by the first terminal or transmitted by another communications network element;
(02) determining the first indication information and/or the second indication information based on whether the terminal capability mapped to the first capability identification information is present or acquirable;
(03) allocating the first capability identification information to the terminal capability of the first terminal based on the terminal capability of the first terminal;
(04) establishing a mapping relationship between the first capability identification information and the terminal capability based on the terminal capability of the first terminal; and
(05) determining the first capability identification information of the first terminal based on the terminal capability of the first terminal and a mapping relationship between a terminal capability and a capability identifier.

In some embodiments, the determining the first indication information and/or the second indication information based on whether the terminal capability mapped to the first capability identification information is present or acquirable may include at least one of the following:
when the terminal capability mapped to the first capability identification information is present or acquirable, the first indication information indicates that the terminal capability mapped to the first capability identification information is present, and/or the second indication information indicates that the terminal capability of the first terminal is present;
when the terminal capability mapped to the first capability identification information is absent but acquirable, the first indication information indicates that the terminal capability mapped to the first capability identification information is present, and/or the second indication information indicates that the terminal capability of the first terminal is present; and
when the terminal capability mapped to the first capability identification information is neither present nor acquirable, the first indication information indicates that the terminal capability mapped to the first capability identification information is absent, and/or the second indication information indicates that the terminal capability of the first terminal is absent.

In some embodiments, in (02), the determining the first indication information and/or the second indication information based on whether the terminal capability mapped to the first capability identification information is present includes at least one of the following:
(021) When the first communications network element has the terminal capability mapped to the first capability identification information or can obtain the terminal capability mapped to the first capability identification information, the first indication information is determined to indicate that the terminal capability mapped to the first capability identification information is present.
(022) When the first communications network element has the terminal capability mapped to the first capability identification information or can obtain the terminal capability mapped to the first capability identification information, the second indication information is determined to indicate that the terminal capability of the first terminal is present.
(023) When the first communications network element does not have the terminal capability mapped to the first capability identification information, but can obtain the terminal capability mapped to the first capability identification information, the first indication information is determined to indicate that the terminal capability mapped to the first capability identification information is present.
(024) When the first communications network element does not have the terminal capability mapped to the first capability identification information, but can obtain the terminal capability mapped to the first capability identification information, the second indication information is determined to indicate that the terminal capability of the first terminal is present.
(025) When the first communications network element does not have the terminal capability mapped to the first capability identification information, the first indication information is determined to indicate that the terminal capability mapped to the first capability identification information is absent.
(026) When the first communications network element does not have the terminal capability mapped to the first capability identification information, the second indication information is determined to indicate that the terminal capability of the first terminal is absent.
(027) When the first communications network element does not have the terminal capability mapped to the first capability identification information, and cannot obtain the terminal capability mapped to the first capability identification information, the first indication information is determined to indicate that the terminal capability mapped to the first capability identification information is absent.
(028) When the first communications network element does not have the terminal capability mapped to the first capability identification information, and cannot obtain the terminal capability mapped to the first capability identification information, the second indication information is determined to indicate that the terminal capability of the first terminal is absent.

In some embodiments of this disclosure, the first communications network element may transmit the first information to the second communications network element.

Optionally, the first communications network element includes at least one of the following: a core network element (such as AMF), a first CN element (such as AMF), and a first RAN element.

Optionally, the second communications network element includes at least one of the following: a core network element (such as AMF), a second CN element (such as AMF), and a second RAN element.

Specifically, the first communications network element is a CN element, and the second communications network element is a RAN element; or
the first communications network element is a first RAN element that has the terminal capability of the first terminal, and the second communications network element is a second RAN element that obtains the terminal capability of the first terminal; or
the first communications network element is a first CN element that has the terminal capability of the first terminal, and the second communications network element is a second CN element that obtains the terminal capability of the first terminal.

The first RAN element may be a source RAN element for handover of the first terminal or a RAN element that receives a terminal context acquisition request, and the second RAN element may be a target RAN element for handover of the first terminal or a RAN element that transmits the terminal context acquisition request.

The first CN element may be a source CN element for handover of the first terminal, and the second core network element is a target CN element for handover of the first terminal.

Alternatively, the first CN element may be a CN element receiving a terminal context acquisition request or a source CN element for handover, and the second core network element may be a CN element transmitting the terminal context acquisition request or a target CN element for handover.

According to some embodiments of this disclosure, the first communications network element transmits the first information related to the terminal capability, so that a communications network element receiving the first information can choose, based on the first information, whether to obtain the terminal capability from the first communications network element or a terminal, thereby avoiding signaling overheads resulting from failed attempts in obtaining the terminal capability from the first communications network element or avoiding always obtaining the terminal capability from the terminal, so as to reduce the frequency of obtaining the terminal capability at an air interface and reduce signaling overheads for transmitting the terminal capability.

Referring to FIG 2, FIG. 1 is a schematic flowchart of a method for obtaining a terminal capability according to some embodiments of this disclosure. The method is applied to a second communications network element and includes the following step.

Step 21: Obtain first information from a first communications network element, where the first information includes at least one of the following: first capability identification information, first indication information, and second indication information.

The first capability identification information is terminal capability identification information of a first terminal; the first indication information is used to indicate whether a terminal capability mapped to the first capability identification information is present, or the first indication information is used to indicate that a terminal capability mapped to the first capability identification information is present, or the first indication information is used to indicate that a terminal capability mapped to the first capability identification information is absent; and the second indication information is used to indicate whether a terminal capability of the first terminal is present, or the second indication information is used to indicate that a terminal capability of the first terminal is present, or the second indication information is used to indicate that a terminal capability of the first terminal is absent.

The obtaining the first information includes: receiving the first information.

Step 22: Obtain the terminal capability of the first terminal based on the first information.

In some embodiments of this disclosure, the second communications network element receives the first information related to the terminal capability, so as to choose whether to obtain the terminal capability from the communications network element transmitting the first information or from the terminal, instead of obtaining the terminal capability always from the communications network element transmitting the first information or always from the terminal, thereby reducing overheads for transmitting the terminal capability.

As described in the foregoing content, one terminal may have one or more pieces of terminal capability identification information. To be specific, the first capability identification information may include one piece of terminal capability identification information of the first terminal, or may include at least two pieces of terminal capability identification information of the first terminal.

In some embodiments of this disclosure, when the first capability identification information includes one piece of terminal capability identification information of the first terminal, the first indication information is used to indicate whether a terminal capability mapped to the first capability identification information is present, or the first indication information is used to indicate that a terminal capability mapped to the first capability identification information is present, or the first indication information is used to indicate that a terminal capability mapped to the first capability identification information is absent.

In some embodiments of this disclosure, when the first capability identification information includes at least two pieces of terminal capability identification information of the first terminal, and each first indication information is used to indicate whether a corresponding terminal capability mapped to the first capability identification information is present, and the first capability identification information is in one-to-one correspondence to the first indication information.

In some embodiments of this disclosure, when the first indication information is used to indicate that the terminal capability mapped to the first capability identification information is absent, the second capability identification information is in one-to-one correspondence to the first indication information. The second capability identification information is terminal capability identification information of a mapped terminal capability that is absent in the first capability identification information.

In some embodiments of this disclosure, when the first indication information is used to indicate that the terminal capability mapped to the first capability identification information is present, third capability identification information is in one-to-one correspondence to the first indication information. The third capability identification information is terminal capability identification information of a mapped terminal capability that is present in the first capability identification information.

In some embodiments of this disclosure, when the first indication information is used to indicate that the terminal capability mapped to the first capability identification information is present, and the third capability identification information includes at least two pieces of terminal capability identification information of the first terminal, all the third capability identification information corresponds to one piece of first indication information, and the third capability identification information is terminal capability identification information of a mapped terminal capability that is present in the first capability identification information.

In some embodiments of this disclosure, when the first indication information is used to indicate that the terminal capability mapped to the first capability identification information is absent, and the second capability identification information includes at least two pieces of terminal capability identification information of the first terminal, all the second capability identification information corresponds to one piece of first indication information, and the second capability identification information is terminal capability identification information of a mapped terminal capability that is absent in the first capability identification information.

Optionally, the first communications network element is a CN element, and the second communications network element is a RAN element; or
the first communications network element is a first RAN element that has the terminal capability of the first terminal, and the second communications network element is a second RAN element that obtains the terminal capability of the first terminal; or
the first communications network element is a first CN element that has the terminal capability of the first terminal, and the second communications network element is a second CN element that obtains the terminal capability of the first terminal.

In some embodiments of this disclosure, the obtaining the terminal capability of the first terminal based on the first information includes:
when a first condition is satisfied, obtaining the terminal capability of the first terminal from the first communications network element, or obtaining, from the first communications network element, the terminal capability mapped to the first capability identification information.

The first condition includes at least one of the following:
the second communications network element does not have the terminal capability mapped to the first capability identification information;
the second communications network element does not have the terminal capability of the first terminal;
the first information includes the first indication information, and the first indication information indicates that the terminal capability mapped to the first capability identification information is present; and
the first information includes the second indication information, and the second indication information indicates that the terminal capability of the first terminal is present.

In some embodiments of this disclosure, when the first condition is satisfied, the second communications network element needs to obtain the terminal capability of the first terminal from the first communications network element or obtain, from the first communications network element, the terminal capability mapped to the first capability identification information, instead of obtaining the terminal capability of the first terminal always from the first communications network element regardless of a scenario, thereby reducing overheads.

In some embodiments of this disclosure, the obtaining the terminal capability of the first terminal based on the first information includes:
when a second condition is satisfied, obtaining the terminal capability of the first terminal from a second terminal, or obtaining, from a second terminal, the terminal capability mapped to the first capability identification information, where the second terminal is the first terminal or a terminal other than the first terminal.

The second condition includes at least one of the following:
the second communications network element does not have the terminal capability mapped to the first capability identification information;
the second communications network element does not have the terminal capability of the first terminal;
the first information includes the first indication information, and the first indication information indicates that the terminal capability mapped to the first capability identification information is absent;
the first information does not include the first indication information;
the first information includes the second indication information, and the second indication information indicates that the terminal capability of the first terminal is absent; and
the first information does not include the second indication information.

In some embodiments of this disclosure, when the second condition is satisfied, the second communications network element needs to obtain, from the terminal (the first terminal or another terminal), the terminal capability of the first terminal or the terminal capability mapped to the first capability identification information, instead of obtaining the terminal capability of the first terminal always from the terminal regardless of a scenario, thereby reducing overheads.

In some embodiments of this disclosure, after the obtaining the terminal capability of the first terminal from the second terminal or obtaining, from the second terminal, the terminal capability mapped to the first capability identification information, the following step may be further included: synchronizing the terminal capability of the first terminal or the terminal capability mapped to the first capability identification information to the first communications network element.

In some embodiments of this disclosure, the obtaining the terminal capability of the first terminal based on the first information includes: when a third condition is satisfied, obtaining, from the first communications network element, a terminal capability mapped to third capability identification information, where when the first capability identification information includes at least two pieces of terminal capability identification information of the first terminal, the third capability identification information is terminal capability identification information of a mapped terminal capability that is present in the first capability identification information.

The third condition includes at least one of the following:
the second communications network element does not have the terminal capability mapped to the third capability identification information;
the first information includes the first indication information, and the first indication information indicates that the terminal capability mapped to the third capability identification information is present; and
the first information does not include first indication information corresponding to the third capability identification information, and when the first indication information corresponding to the third capability identification information does not exist, the first information indicates by default that the third capability identification information has a mapped terminal capability.

In some embodiments of this disclosure, when the first terminal has at least two pieces of capability identification information, and the first communications network element has or can obtain a terminal capability mapped to one part of capability identification information (that is, the third capability identification information) in the at least two pieces of terminal capability identification information, the second communications network element obtains, from the first communications network element, the terminal capability mapped to the third capability identification information. The second communications network element does not obtain, from the first communications network element, a terminal capability that the first communications network element does not have or cannot obtain and that is mapped to the other part of capability identification information in the at least two pieces of terminal capability identification information, thereby avoiding useless overheads.

In some embodiments of this disclosure, the obtaining the terminal capability of the first terminal based on the first information includes: when a fourth condition is satisfied, obtaining, from a second terminal, a terminal capability mapped to the third capability identification information, where the second terminal is the first terminal or a terminal other than the first terminal; and when the first capability identification information includes at least two pieces of terminal capability identification information of the first terminal, the second capability identification information is terminal capability identification information of a mapped terminal capability that is absent in the first capability identification information.

The fourth condition includes at least one of the following:
the second communications network element does not have the terminal capability mapped to the second capability identification information;
the first information includes the first indication information, and the first indication information indicates that the terminal capability mapped to the second capability identification information is absent; and
the first information does not include first indication information corresponding to the second capability identification information, and when the first indication information corresponding to the second capability identification information does not exist, the first information indicates by default that the second capability identification information does not have a mapped terminal capability.

In some embodiments of this disclosure, when the first terminal has at least two pieces of terminal capability identification information, and the first communications network element does not have or cannot obtain a terminal capability mapped to one part of capability identification information (that is, the second capability identification information) in the at least two pieces of terminal capability identification information, the second communications network element does not obtain, from the first communications network element, a terminal capability mapped to the second capability identification information, but obtains the terminal capability from a terminal (the first terminal or another terminal), thereby avoiding useless overheads.

In some embodiments of this disclosure, after the obtaining, from the second terminal, the terminal capability mapped to the third capability identification information, the following step may be further included: synchronizing the terminal capability mapped to the third capability identification information to the first communications network element.

A specific communication scenario is used as an example below to describe the foregoing method of this disclosure.

### First scenario in some embodiments of this disclosure

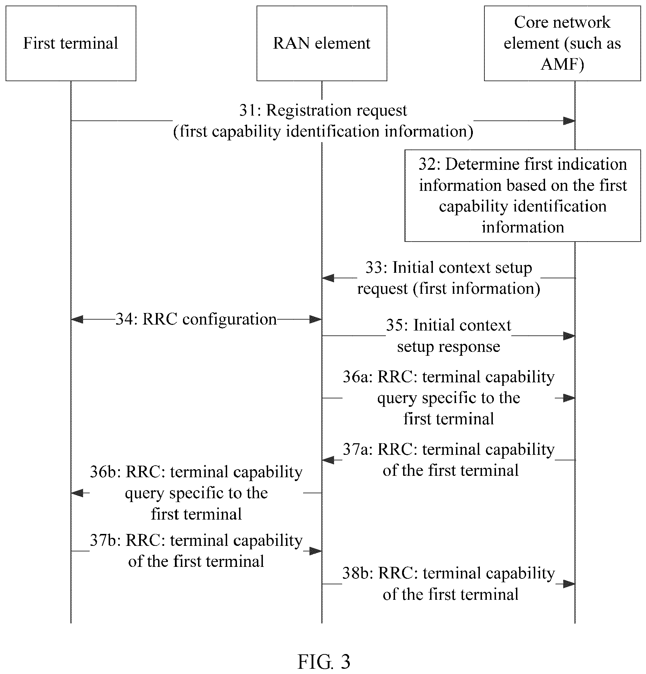

Referring to FIG. 3, FIG. 3 is a schematic flowchart of a communication method in the first scenario in some embodiments of this disclosure. The communication method is applied to a communications system that includes a first terminal, a RAN element (such as an NG RAN element), and a CN element (such as AMF). The RAN element can implement at least a part of functions implemented by the second communications network element in the foregoing embodiment, and the CN element can implement at least a part of functions implemented by the first communications network element in the foregoing embodiment. An example in which the NG RAN element serves as the RAN element and the AMF serves as the CN element is used to describe the communication method that includes the following steps.

Step 31: The first terminal transmits a registration request (Registration Request) to the AMF through the NG RAN element, where the registration request carries first capability identification information.

Step 32: The AMF determines first indication information based on whether the first capability identification information has a mapped terminal capability. The first indication information is used to indicate whether the AMF has a terminal capability mapped to a first capability identifier.

Step 33: The AMF transmits an initial context setup request (Initial Context setup Request) to the NG RAN element, where the initial context setup request carries first information. The first information includes the first capability identification information of the first terminal and the first indication information, or the first capability identification information and second indication information, or second indication information. The first indication information is used to indicate whether a target AMF has a terminal capability mapped to the first capability identification information, and the second indication information is used to indicate whether a terminal capability of the first terminal is present.

Step 34: The NG RAN element establishes an RRC connection to the first terminal.

Step 35: The NG RAN element transmits an initial context setup response (Initial Context setup Response) to the AMF

Step 36a: The NG RAN element determines whether the terminal capability mapped to the first capability identification information is present. If there is no terminal capability mapped to the first capability identification information, and the first indication information indicates that the AMF has the terminal capability mapped to the first capability identifier, the NG RAN element transmits, to the AMF, a terminal capability query request specific to the first terminal.

Step 37a: The AMF returns the terminal capability of the first terminal to the NG RAN element.

Step 36b: The NG RAN element determines whether the terminal capability mapped to the first capability identification information is present. If there is no terminal capability mapped to the first capability identification information, and the first indication information indicates that the AMF does not have the terminal capability mapped to the first capability identifier, the NG RAN element transmits, to the first terminal, a terminal capability query request specific to the first terminal.

Step 37b: The first terminal returns the terminal capability of the first terminal to the NG RAN element.

Step 38b: The NG RAN element synchronizes the terminal capability of the first terminal to the AMF.

The method for indicating a terminal capability and the method for obtaining a terminal capability in some embodiments of this disclosure are also applicable to terminal handover scenarios, which are described below by using an example.

### Second scenario in some embodiments of this disclosure

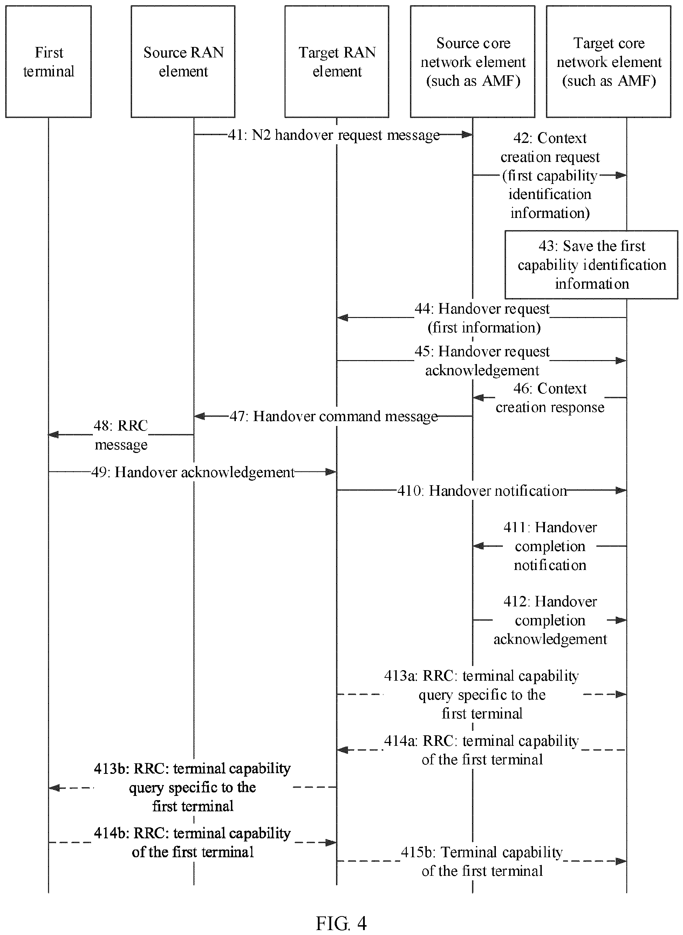

Referring to FIG. 4, FIG. 4 is a schematic flowchart of a communication method in the second scenario in some embodiments of this disclosure. The communication method is applied to a communication system that includes a first terminal, a source RAN element, a target RAN element, and a source CN element (such as AMF), and a target CN element (such as AMF). The target RAN element can implement at least a part of functions implemented by the second communications network element in the foregoing embodiment, and the target CN element can implement at least a part of functions implemented by the first communications network element in the foregoing embodiment. An example in which the AMF serves as the CN element is used below to describe the communication method that includes the following steps.

Step 41: During handover of the first terminal through a CN, the source RAN element transmits an N2 handover request message to the source AMF.

Step 42: The source AMF transmits a context creation request message to the target AMF, where the context creation request message carries first capability identification information of the first terminal.

Step 43: The target AMF saves the first capability identification information.

Step 44: The target AMF transmits a handover request to the target RAN element, where the handover request carries first information. The first information includes the first capability identification information of the first terminal and first indication information, or the first capability identification information and second indication information, or second indication information. The first indication information is used to indicate whether the target AMF has a terminal capability mapped to the first capability identification information, and the second indication information is used to indicate whether a terminal capability of the first terminal is present.

Step 45: The target RAN element transmits a handover request acknowledgement to the target AMF

Step 46: The target AMF transmits a context creation response to the source AMF.

Step 47: The source AMF transmits a handover command message to the source RAN element.

Step 48: The source RAN element transmits an RRC message to the first terminal.

Step 49: The first terminal transmits a handover acknowledgement to the target RAN element.

Step 410: The target RAN element transmits a handover notification to the target AMF

Step 411: The target AMF transmits a handover completion notification to the source AMF

Step 412: The source AMF transmits a handover completion acknowledgement to the target AMF

Step 413a: If the first indication information indicates that the target AMF has the terminal capability mapped to the first capability identification information, the target RAN element transmits, to the target AMF, a terminal capability query specific to the first terminal.

Step 414a: The target AMF transmits the terminal capability of the first terminal to the target RAN element.

Step 413b: If the first indication information indicates that the target AMF does not have the terminal capability mapped to the first capability identification information, the target RAN element transmits, to the first terminal, a terminal capability query specific to the first terminal.

Step 414b: The first terminal transmits the terminal capability of the first terminal to the target RAN element.

Step 415b: The target RAN element synchronizes the terminal capability of the first terminal to the target AMF.

In some other embodiments of this disclosure, during Xn (Xn is an interface between RANs) handover performed by the first terminal, the source RAN element may transmit a first capability identifier and the first indication information to the target RAN element in the handover process, where the first indication information is used to indicate whether the source RAN has a terminal capability mapped to the first capability identifier. The target RAN may obtain the terminal capability of the first terminal from the source RAN element or the first terminal based on the first indication information.

In some other embodiments of this disclosure, during context acquisition between core network elements or context transfer in the handover process, the source core network element may transmit the first capability identification information of the first terminal and the first indication information to the target core network element, where the first indication information is used to indicate whether the source core network element has the terminal capability mapped to the first capability identifier, and the target core network element may obtain the terminal capability of the first terminal from the source core network element or the first terminal based on the first indication information.

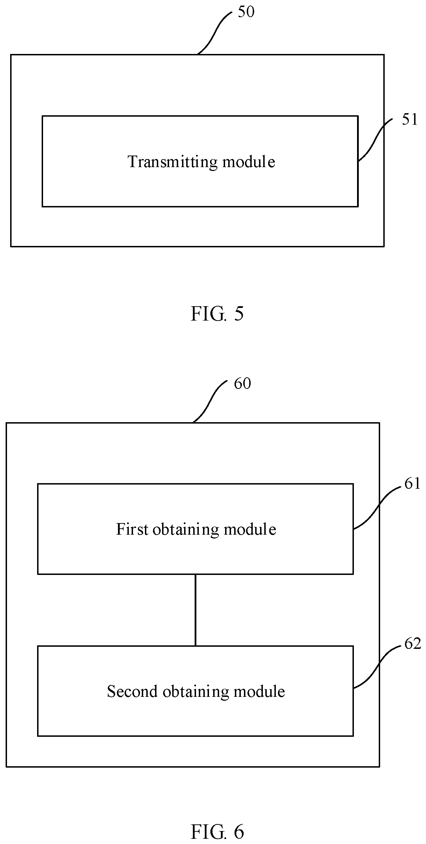

Referring to FIG. 5, FIG. 5 is a schematic structural diagram of a first communications network element according to some embodiments of this disclosure. The first communications network element 50 includes:
a transmitting module 51, configured to transmit first information to a second communications network element, where the first information includes at least one of the following: first capability identification information, first indication information, and second indication information.

The first capability identification information is terminal capability identification information of a first terminal.

The first indication information is used to indicate whether a terminal capability mapped to the first capability identification information is present, or the first indication information is used to indicate that a terminal capability mapped to the first capability identification information is present, or the first indication information is used to indicate that a terminal capability mapped to the first capability identification information is absent; and the second indication information is used to indicate whether a terminal capability of the first terminal is present, or the second indication information is used to indicate that a terminal capability of the first terminal is present, or the second indication information is used to indicate that a terminal capability of the first terminal is absent.

In some embodiments of this disclosure, when the first indication information is used to indicate whether the terminal capability mapped to the first capability identification information is present, the first capability identification information is in one-to-one correspondence to the first indication information. In some embodiments of this disclosure, when the first indication information is used to indicate that the terminal capability mapped to the first capability identification information is absent, the second capability identification information is in one-to-one correspondence to the first indication information. The second capability identification information is terminal capability identification information of a mapped terminal capability that is absent in the first capability identification information.

In some embodiments of this disclosure, when the first indication information is used to indicate that the terminal capability mapped to the first capability identification information is present, third capability identification information is in one-to-one correspondence to the first indication information. The third capability identification information is terminal capability identification information of a mapped terminal capability that is present in the first capability identification information.

In some embodiments of this disclosure, when the first indication information is used to indicate that the terminal capability mapped to the first capability identification information is absent, and when the second capability identification information includes at least two pieces of terminal capability identification information of the first terminal, all the second capability identification information corresponds to one piece of first indication information. The second capability identification information is terminal capability identification information of a mapped terminal capability that is absent in the first capability identification information.

In some embodiments of this disclosure, when the first indication information is used to indicate that the terminal capability mapped to the first capability identification information is present, and when the third capability identification information includes at least two pieces of terminal capability identification information of the first terminal, all the third capability identification information corresponds to one piece of first indication information. The third capability identification information is terminal capability identification information of a mapped terminal capability that is present in the first capability identification information.

The first communications network element in some embodiments of this disclosure may further include at least one of the following modules:
a receiving module, configured to receive the first capability identification information of the first terminal that is reported by the first terminal or transmitted by another communications network element;
a first determining module, configured to determine the first indication information and/or the second indication information based on whether the first capability identification information has a mapped terminal capability;
an allocation module, configured to allocate the first capability identification information to the terminal capability of the first terminal based on the terminal capability of the first terminal;
a mapping module, configured to establish a mapping relationship between the first capability identification information and the terminal capability based on the terminal capability of the first terminal; and
a second determining module, configured to determine the first capability identification information of the first terminal based on the terminal capability of the first terminal and a mapping relationship between a terminal capability and a capability identifier.

In some embodiments of this disclosure, the transmitting module is configured to transmit the first information to the second communications network element.

In some embodiments of this disclosure, the first communications network element is a CN element, and the second communications network element is a RAN element; or
the first communications network element is a first RAN element that has the terminal capability of the first terminal, and the second communications network element is a second RAN element that obtains the terminal capability of the first terminal; or
the first communications network element is a first CN element that has the terminal capability of the first terminal, and the second communications network element is a second CN element that obtains the terminal capability of the first terminal.

According to some embodiments of this disclosure, the first communications network element transmits the first information related to the terminal capability, so that a communications network element receiving the first information can choose, based on the first information, whether to obtain the terminal capability from the first communications network element or a terminal, thereby avoiding signaling overheads resulting from failed attempts in obtaining the terminal capability from the first communications network element or avoiding always obtaining the terminal capability from the terminal, so as to reduce the frequency of obtaining the terminal capability at an air interface and reduce signaling overheads for transmitting the terminal capability.

Referring to FIG. 6, FIG. 6 is a schematic structural diagram of a second communications network element according to some embodiments of this disclosure. The first communications network element 60 includes:
a first obtaining module 61, configured to obtain first information from a first communications network element, where the first information includes at least one of the following: first capability identification information, first indication information, and second indication information; where
the first capability identification information is terminal capability identification information of a first terminal; the first indication information is used to indicate whether a terminal capability mapped to the first capability identification information is present, or the first indication information is used to indicate that a terminal capability mapped to the first capability identification information is present, or the first indication information is used to indicate that a terminal capability mapped to the first capability identification information is absent; and the second indication information is used to indicate whether a terminal capability of the first terminal is present, or the second indication information is used to indicate that a terminal capability of the first terminal is present, or the second indication information is used to indicate that a terminal capability of the first terminal is absent; and
a second obtaining module 62, configured to obtain the terminal capability of the first terminal based on the first information.

In some embodiments of this disclosure, when the first information includes one piece of first capability identification information of the first terminal, the first indication information is used to indicate whether the terminal capability mapped to the first capability identification information is present.

In some embodiments of this disclosure, when the first indication information is used to indicate whether the terminal capability mapped to the first capability identification information is present, the first capability identification information is in one-to-one correspondence to the first indication information. In some embodiments of this disclosure, when the first indication information is used to indicate that the terminal capability mapped to the first capability identification information is absent, the second capability identification information is in one-to-one correspondence to the first indication information. The second capability identification information is terminal capability identification information of a mapped terminal capability that is absent in the first capability identification information.

In some embodiments of this disclosure, when the first indication information is used to indicate that the terminal capability mapped to the first capability identification information is present, third capability identification information is in one-to-one correspondence to the first indication information. The third capability identification information is terminal capability identification information of a mapped terminal capability that is present in the first capability identification information.

In some embodiments of this disclosure, when the first indication information is used to indicate that the terminal capability mapped to the first capability identification information is absent, and when the second capability identification information includes at least two pieces of terminal capability identification information of the first terminal, all the second capability identification information corresponds to one piece of first indication information. The second capability identification information is terminal capability identification information of a mapped terminal capability that is absent in the first capability identification information.

In some embodiments of this disclosure, when the first indication information is used to indicate that the terminal capability mapped to the first capability identification information is present, and when the third capability identification information includes at least two pieces of terminal capability identification information of the first terminal, all the third capability identification information corresponds to one piece of first indication information. The third capability identification information is terminal capability identification information of a mapped terminal capability that is present in the first capability identification information.

In some embodiments of this disclosure, the second obtaining module 62 may include:
a first obtaining submodule, configured to: when a first condition is satisfied, obtain the terminal capability of the first terminal from the first communications network element, or obtain, from the first communications network element, the terminal capability mapped to the first capability identification information.

The first condition includes at least one of the following:
the second communications network element does not have the terminal capability mapped to the first capability identification information;
the second communications network element does not have the terminal capability of the first terminal;
the first information includes the first indication information, and the first indication information indicates that the terminal capability mapped to the first capability identification information is present; and
the first information includes the second indication information, and the second indication information indicates that the terminal capability of the first terminal is present.

In some embodiments of this disclosure, the second obtaining module 62 may include:
a second obtaining submodule, configured to: when a second condition is satisfied, obtain the terminal capability of the first terminal from a second terminal, or obtain, from a second terminal, the terminal capability mapped to the first capability identification information, where the second terminal is the first terminal or a terminal other than the first terminal.

The second condition includes at least one of the following:
the second communications network element does not have the terminal capability mapped to the first capability identification information;
the second communications network element does not have the terminal capability of the first terminal;
the first information includes the first indication information, and the first indication information indicates that the terminal capability mapped to the first capability identification information is absent;
the first information does not include the first indication information;
the first information includes the second indication information, and the second indication information indicates that the terminal capability of the first terminal is absent; and
the first information does not include the second indication information.

In some embodiments of this disclosure, the second obtaining module 62 may include:
a third obtaining submodule, configured to: when a third condition is satisfied, obtain, from the first communications network element, a terminal capability mapped to third capability identification information, where when the first capability identification information includes at least two pieces of terminal capability identification information of the first terminal, the third capability identification information is terminal capability identification information of a mapped terminal capability that is present in the first capability identification information.

The third condition includes at least one of the following:
the second communications network element does not have the terminal capability mapped to the third capability identification information;
the first information includes the first indication information, and the first indication information indicates that the terminal capability mapped to the third capability identification information is present; and
the first information does not include first indication information corresponding to the third capability identification information, and when the first indication information corresponding to the third capability identification information does not exist, the first information indicates by default that the third capability identification information has a mapped terminal capability.

In some embodiments of this disclosure, the second obtaining module 62 may include:
a fourth obtaining submodule, configured to: when a fourth condition is satisfied, obtain, from a second terminal, a terminal capability mapped to the third capability identification information, where the second terminal is the first terminal or a terminal other than the first terminal; and when the first capability identification information includes at least two pieces of terminal capability identification information of the first terminal, the second capability identification information is terminal capability identification information of a mapped terminal capability that is absent in the first capability identification information.

The fourth condition includes at least one of the following:
the second communications network element does not have the terminal capability mapped to the second capability identification information;
the first information includes the first indication information, and the first indication information indicates that the terminal capability mapped to the second capability identification information is absent; and
the first information does not include first indication information corresponding to the second capability identification information, and when the first indication information corresponding to the second capability identification information does not exist, the first information indicates by default that the second capability identification information does not have a mapped terminal capability.

In some embodiments of this disclosure, the first communications network element is a CN element, and the second communications network element is a RAN element; or
the first communications network element is a first RAN element that has the terminal capability of the first terminal, and the second communications network element is a second RAN element that obtains the terminal capability of the first terminal; or
the first communications network element is a first CN element that has the terminal capability of the first terminal, and the second communications network element is a second CN element that obtains the terminal capability of the first terminal.

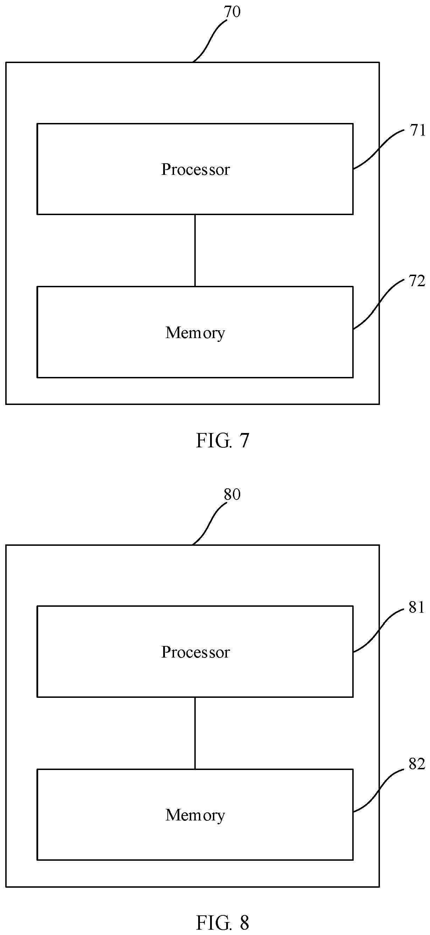

Referring to FIG. 7, FIG. 7 is a schematic structural diagram of a first communications network element according to another embodiment of this disclosure. The first communications network element 70 includes a processor 71 and a memory 72. In some embodiments of this disclosure, the first communications network element 70 further includes a computer program stored in the memory 72 and capable of running on the processor 71. When the computer program is executed by the processor 71, the following step is implemented:
transmitting first information to a second communications network element, where the first information includes at least one of the following: first capability identification information, first indication information, and second indication information.

The first capability identification information is terminal capability identification information of a first terminal.

The first indication information is used to indicate whether a terminal capability mapped to the first capability identification information is present, or the first indication information is used to indicate that a terminal capability mapped to the first capability identification information is present, or the first indication information is used to indicate that a terminal capability mapped to the first capability identification information is absent; and the second indication information is used to indicate whether a terminal capability of the first terminal is present, or the second indication information is used to indicate that a terminal capability of the first terminal is present, or the second indication information is used to indicate that a terminal capability of the first terminal is absent.

Optionally, when the first indication information is used to indicate whether the terminal capability mapped to the first capability identification information is present, the first capability identification information is in one-to-one correspondence to the first indication information; and/or
when the first indication information is used to indicate that the terminal capability mapped to the first capability identification information is absent, second capability identification information is in one-to-one correspondence to the first indication information; and/or
when the first indication information is used to indicate that the terminal capability mapped to the first capability identification information is present, third capability identification information is in one-to-one correspondence to the first indication information; and/or
when the first indication information is used to indicate that the terminal capability mapped to the first capability identification information is absent, and when the second capability identification information includes at least two pieces of terminal capability identification information of the first terminal, all the second capability identification information corresponds to one piece of first indication information; and/or
when the first indication information is used to indicate that the terminal capability mapped to the first capability identification information is present, and when the third capability identification information includes at least two pieces of terminal capability identification information of the first terminal, all the third capability identification information corresponds to one piece of first indication information.

The second capability identification information is terminal capability identification information of a mapped terminal capability that is absent in the first capability identification information, and the third capability identification information is terminal capability identification information of a mapped terminal capability that is present in the first capability identification information.

Optionally, when the computer program is executed by the processor 71, the following step may be further implemented: before the transmitting the first information to the second communications network element, at least one of the following is further executed:
receiving the first capability identification information that is reported by the first terminal or transmitted by another communications network element;
determining the first indication information and/or the second indication information based on whether the first capability identification information has a mapped terminal capability;
allocating the first capability identification information to the terminal capability of the first terminal based on the terminal capability of the first terminal;
establishing a mapping relationship between the first capability identification information and the terminal capability based on the terminal capability of the first terminal; and
determining the first capability identification information of the first terminal based on the terminal capability of the first terminal and a mapping relationship between a terminal capability and a capability identifier.

Optionally, when the computer program is executed by the processor 71, the following step may be further implemented: transmitting the first information to the second communications network element.

Optionally, the first communications network element is a CN element, and the second communications network element is a RAN element; or
the first communications network element is a first RAN element that has the terminal capability of the first terminal, and the second communications network element is a second RAN element that obtains the terminal capability of the first terminal; or
the first communications network element is a first CN element that has the terminal capability of the first terminal, and the second communications network element is a second CN element that obtains the terminal capability of the first terminal.

Referring to FIG. 8, FIG. 8 is a schematic structural diagram of a first communications network element according to another embodiment of this disclosure. The first communications network element 80 includes a processor 81 and a memory 82. In some embodiments of this disclosure, the first communications network element 80 further includes a computer program stored in the memory 82 and capable of running on the processor 81. When the computer program is executed by the processor 81, the following steps are implemented:
obtaining first information from a first communications network element, where the first information includes at least one of the following: first capability identification information, first indication information, and second indication information; the first capability identification information is terminal capability identification information of a first terminal; the first indication information is used to indicate whether a terminal capability mapped to the first capability identification information is present, or the first indication information is used to indicate that a terminal capability mapped to the first capability identification information is present, or the first indication information is used to indicate that a terminal capability mapped to the first capability identification information is absent; and the second indication information is used to indicate whether a terminal capability of the first terminal is present, or the second indication information is used to indicate that a terminal capability of the first terminal is present, or the second indication information is used to indicate that a terminal capability of the first terminal is absent; and
obtaining the terminal capability of the first terminal based on the first information.

Optionally,
when the first indication information is used to indicate whether the terminal capability mapped to the first capability identification information is present, the first capability identification information is in one-to-one correspondence to the first indication information; and/or
when the first indication information is used to indicate that the terminal capability mapped to the first capability identification information is absent, second capability identification information is in one-to-one correspondence to the first indication information; and/or
when the first indication information is used to indicate that the terminal capability mapped to the first capability identification information is present, third capability identification information is in one-to-one correspondence to the first indication information; and/or
when the first indication information is used to indicate that the terminal capability mapped to the first capability identification information is absent, and when the second capability identification information includes at least two pieces of terminal capability identification information of the first terminal, all the second capability identification information corresponds to one piece of first indication information; and/or
when the first indication information is used to indicate that the terminal capability mapped to the first capability identification information is present, and when the third capability identification information includes at least two pieces of terminal capability identification information of the first terminal, all the third capability identification information corresponds to one piece of first indication information.

The second capability identification information is terminal capability identification information of a mapped terminal capability that is absent in the first capability identification information, and the third capability identification information is terminal capability identification information of a mapped terminal capability that is present in the first capability identification information.

Optionally, when the computer program is executed by the processor 81, the following step may be further implemented: the obtaining the terminal capability of the first terminal based on the first information includes:
when a first condition is satisfied, obtaining the terminal capability of the first terminal from the first communications network element, or obtaining, from the first communications network element, the terminal capability mapped to the first capability identification information.

The first condition includes at least one of the following:
the second communications network element does not have the terminal capability mapped to the first capability identification information;
the second communications network element does not have the terminal capability of the first terminal;
the first information includes the first indication information, and the first indication information indicates that the terminal capability mapped to the first capability identification information is present; and
the first information includes the second indication information, and the second indication information indicates that the terminal capability of the first terminal is present.

Optionally, when the computer program is executed by the processor 81, the following step may be further implemented: the obtaining the terminal capability of the first terminal based on the first information includes:
when a second condition is satisfied, obtaining the terminal capability of the first terminal from a second terminal, or obtaining, from a second terminal, the terminal capability mapped to the first capability identification information, where the second terminal is the first terminal or a terminal other than the first terminal.

The second condition includes at least one of the following:
the second communications network element does not have the terminal capability mapped to the first capability identification information;
the second communications network element does not have the terminal capability of the first terminal;
the first information includes the first indication information, and the first indication information indicates that the terminal capability mapped to the first capability identification information is absent;
the first information does not include the first indication information;
the first information includes the second indication information, and the second indication information indicates that the terminal capability of the first terminal is absent; and
the first information does not include the second indication information.

Optionally, when the computer program is executed by the processor 71, the following step may be further implemented: the obtaining the terminal capability of the first terminal based on the first information includes:
when a third condition is satisfied, obtaining, from the first communications network element, a terminal capability mapped to third capability identification information, where when the first capability identification information includes at least two pieces of terminal capability identification information of the first terminal, the third capability identification information is terminal capability identification information of a mapped terminal capability that is present in the first capability identification information.

The third condition includes at least one of the following:
the second communications network element does not have the terminal capability mapped to the third capability identification information;
the first information includes the first indication information, and the first indication information indicates that the terminal capability mapped to the third capability identification information is present; and
the first information does not include first indication information corresponding to the third capability identification information, and when the first indication information corresponding to the third capability identification information does not exist, the first information indicates by default that the third capability identification information has a mapped terminal capability.

Optionally, when the computer program is executed by the processor 81, the following step may be further implemented: the obtaining the terminal capability of the first terminal based on the first information includes:
when a fourth condition is satisfied, obtaining, from a second terminal, a terminal capability mapped to the third capability identification information, where the second terminal is the first terminal or a terminal other than the first terminal; and when the first capability identification information includes at least two pieces of terminal capability identification information of the first terminal, the second capability identification information is terminal capability identification information of a mapped terminal capability that is absent in the first capability identification information.

The fourth condition includes at least one of the following:
the second communications network element does not have the terminal capability mapped to the second capability identification information;
the first information includes the first indication information, and the first indication information indicates that the terminal capability mapped to the second capability identification information is absent; and
the first information does not include first indication information corresponding to the second capability identification information, and when the first indication information corresponding to the second capability identification information does not exist, the first information indicates by default that the second capability identification information does not have a mapped terminal capability.

Optionally, the first communications network element is a CN element, and the second communications network element is a RAN element; or
the first communications network element is a first RAN element that has the terminal capability of the first terminal, and the second communications network element is a second RAN element that obtains the terminal capability of the first terminal; or
the first communications network element is a first CN element that has the terminal capability of the first terminal, and the second communications network element is a second CN element that obtains the terminal capability of the first terminal.

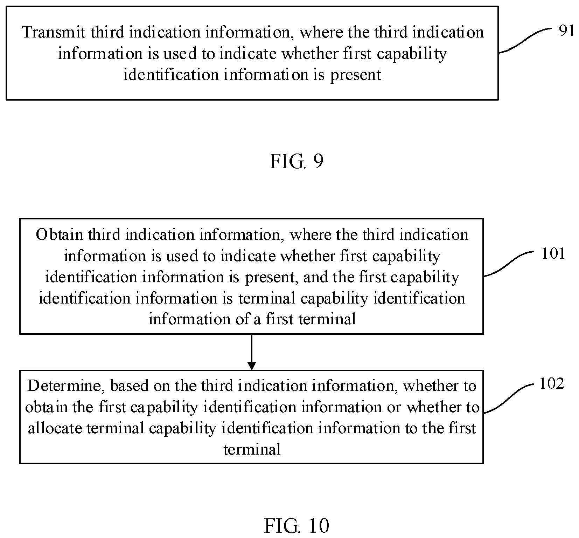

Referring to FIG. 9, FIG. 9 is a schematic flowchart of a method for indicating a terminal capability identifier according to another embodiment of this disclosure. The indication method is applied to a third communications device and includes the following step.

Step 91: Transmit third indication information, where the third indication information is used to indicate whether first capability identification information is present.

The first capability identification information is terminal capability identification information of a first terminal.

Before transmitting the third indication information, the third communications network element may determine the third indication information based on whether the first capability identification information is present or acquirable, which specifically includes at least one of the following:
when the first capability identification information is present or acquirable, the third indication information indicates that the first capability identification information is present;
when the first capability identification information is absent but acquirable, the third indication information indicates that the first capability identification information is present; and
when the first capability identification information is neither present nor acquirable, the third indication information indicates that the first capability identification information is absent.

Optionally, the third indication information is transmitted to a fourth communications network element.

Optionally, the third communications device includes at least one of the following: a terminal, a core network element, and a radio access network element.

According to some embodiments of this disclosure, the third communications device transmits the third indication information indicating whether the first capability identification information is present, so that a communications network element receiving the third indication information can choose, based on the third indication information, whether to obtain terminal capability identification information from the third communications device, thereby avoiding signaling overheads resulting from failed attempts in obtaining the terminal capability identification information from the third communications device or avoiding always obtaining the terminal capability identification information from the third communications device, so as to reduce signaling overheads for transmitting the terminal capability identification information.

Referring to FIG. 10, FIG. 10 is a schematic flowchart of a method for obtaining a terminal capability identifier according to another embodiment of this disclosure. The indication method is applied to a fourth communications network element and includes the following steps.

Step 101: Obtain third indication information, where the third indication information is used to indicate whether first capability identification information is present, and the first capability identification information is terminal capability identification information of a first terminal.

Step 102: Determine, based on the third indication information, whether to obtain the first capability identification information or whether to allocate terminal capability identification information to the first terminal.

Optionally, the obtaining third indication information includes:
obtaining the third indication information from a third communications device.

Optionally, the determining, based on the third indication information, whether to obtain the first capability identification information includes:
obtaining the first capability identification information from the third communications device when a first condition for obtaining a capability identifier is satisfied.

The first condition for obtaining a capability identifier includes at least one of the following:
the fourth communications network element does not have the first capability identification information; and
the third indication information indicates that the first capability identification information is present.

Optionally, the determining, based on the third indication information, whether to allocate terminal capability identification information to the first terminal includes:
allocating the terminal capability identification information to the first terminal when a first condition for allocating terminal capability identification information is satisfied.

The first condition for allocating terminal capability identification information includes at least one of the following:
the fourth communications network element does not have the first capability identification information; and
the third indication information indicates that the first capability identification information is absent.

Optionally, the fourth communications network element includes at least one of the following: a core network element and a radio access network element.

Optionally, after the step of determining, based on the third indication information, whether to allocate terminal capability identification information to the first terminal, the following step is further included:
transmitting the terminal capability identification information that is allocated to the first terminal.

For example, the terminal capability identification information is transmitted to the third communications device.

When the third communications device is a terminal, the fourth communications network element may be a CN element and/or a RAN element.

When the third communications device is a CN element, the fourth communications network element may be a RAN element.

When the third communications device is a RAN element, the fourth communications network element may be a CN element.

When the third communications device is a first RAN element, the fourth communications network element may be a second RAN element.

When the third communications device is a first CN element, the fourth communications network element may be a second CN element.

A specific communication scenario is used as an example below to describe the foregoing method of this disclosure.

### Third scenario in some embodiments of this disclosure

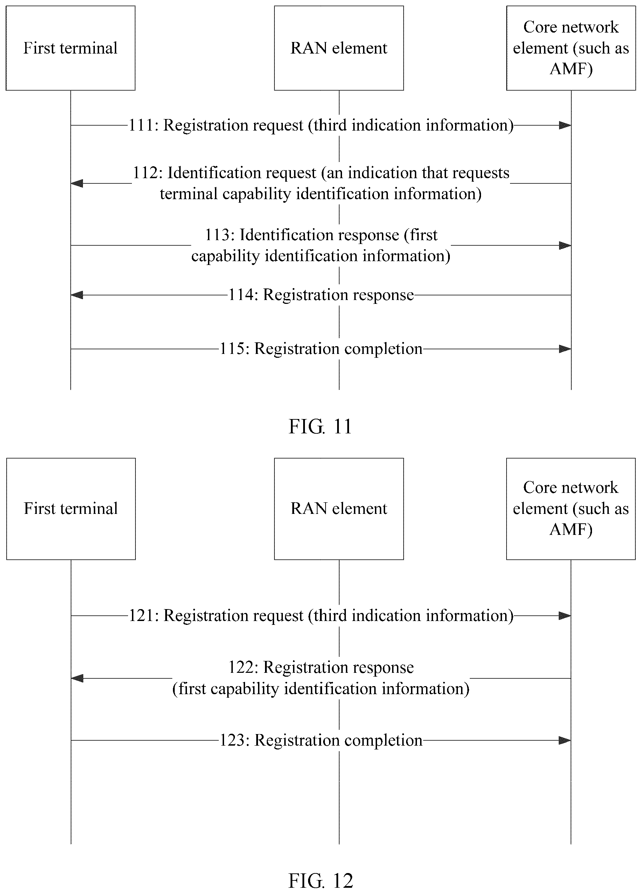

Referring to FIG. 11, FIG. 11 is a schematic flowchart of a communication method in the third scenario in some embodiments of this disclosure. The communication method is applied to a communications system that includes a first terminal, a RAN element (such as an NG RAN element), and a CN element (such as AMF). An example in which the AMF serves as the CN element is used below to describe the communication method that includes the following steps.

Step 111: The first terminal transmits a registration request to the AMF through the RAN element, where the registration request carries third indication information, the third indication information is used to indicate whether first capability identification information is present, and the first capability identification information is terminal capability identification information of the first terminal.

Step 112: If the third indication information is used to indicate that the first capability identification information is present, and/or the AMF does not have the first capability identification information, the AMF transmits an identification request to the first terminal, requesting the terminal capability identification information of the first terminal.

Optionally, the AMF obtains the first capability identification information from the first terminal when a first condition for obtaining a capability identifier is satisfied.

The first condition for obtaining a capability identifier includes at least one of the following:
the AMF does not have the first capability identification information; and
the third indication information indicates that the first capability identification information is present.

Step 113: The first terminal transmits, to the AMF, an identification response carrying the first capability identification information.

Step 114: The AMF transmits a registration response to the first terminal.

Step 115: The first terminal transmits a registration completion to the AMF

### Fourth scenario in some embodiments of this disclosure

Referring to FIG. 12, FIG. 12 is a schematic flowchart of a communication method in the fourth scenario in some embodiments of this disclosure. The communication method is applied to a communications system that includes a first terminal, a RAN element (such as an NG RAN element), and a CN element (such as AMF). An example in which the AMF serves as the CN element is used below to describe the communication method that includes the following steps.

Step 121: The first terminal transmits a registration request to the AMF through the RAN element, where the registration request carries third indication information, the third indication information is used to indicate whether first capability identification information is present, and the first capability identification information is terminal capability identification information of the first terminal.

Step 122: If the third indication information is used to indicate that the first capability identification information is absent, and/or the AMF does not have the first capability identification information, the AMF allocates the first capability identification information to the first terminal and transmits a registration response to the first terminal, where the registration response carries the first capability identification information.

When the AMF allocates terminal capability identification information to the first terminal when a first condition for allocating terminal capability identification information is satisfied.

The first condition for allocating terminal capability identification information includes at least one of the following:
the AMF does not have the first capability identification information; and
the third indication information indicates that the first capability identification information is absent.

Step 123: The first terminal transmits a registration completion to the AMF

### Fifth scenario in some embodiments of this disclosure

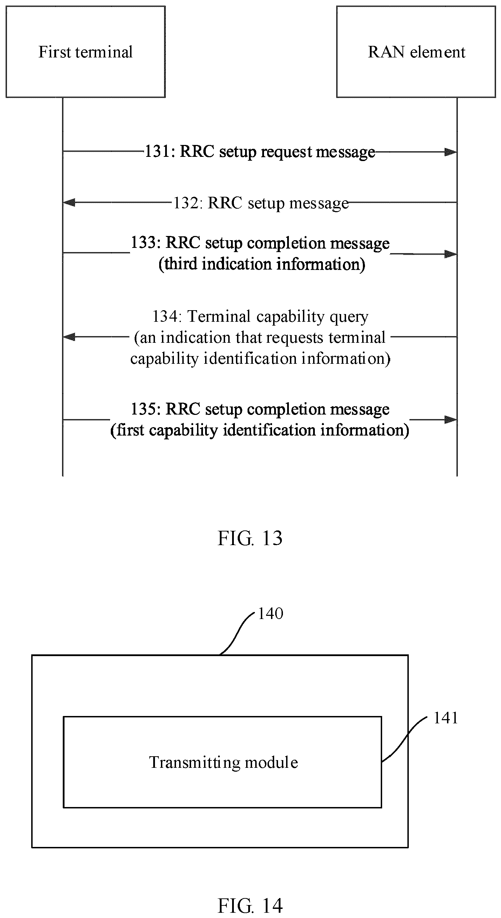

Referring to FIG. 13, FIG. 13 is a schematic flowchart of a communication method in the fifth scenario in some embodiments of this disclosure. The communication method is applied to a communications system that includes a first terminal and a RAN element (such as an NG RAN element). The communication method includes the following steps.

Step 131: The first terminal transmits an RRC setup request message to the RAN element.

Step 132: The RAN element transmits an RRC setup message to the first terminal.

Step 133: The first terminal transmits an RRC setup completion message to the RAN element, where the RRC setup completion message carries third indication information, the third indication information is used to indicate whether first capability identification information is present, and the first capability identification information is terminal capability identification information of the first terminal.

Step 134: If the third indication information is used to indicate that the first capability identification information is present, the RAN element transmits a terminal capability query to the first terminal, requesting the terminal capability identification information of the first terminal.

Step 135: The first terminal transmits an RRC setup completion message to the RAN element, where the RRC setup completion message carries the first capability identification information.

Referring to FIG. 14, FIG. 14 is a schematic structural diagram of a third communications device according to some embodiments of this disclosure. The third communications device 140 includes:
a transmitting module 141, configured to transmit third indication information, where the third indication information is used to indicate whether first capability identification information is present, and the first capability identification information is terminal capability identification information of a first terminal.

Optionally, the third indication information is transmitted to a fourth communications network element.

Optionally, the third communications device includes at least one of the following: a terminal, a core network element, and a radio access network element.

According to some embodiments of this disclosure, the third communications device transmits the third indication information indicating whether the first capability identification information is present, so that a communications network element receiving the third indication information can choose, based on the third indication information, whether to obtain terminal capability identification information from the third communications device, thereby avoiding signaling overheads resulting from failed attempts in obtaining the terminal capability identification information from the third communications device or avoiding always obtaining the terminal capability identification information from the third communications device, so as to reduce signaling overheads for transmitting the terminal capability identification information.

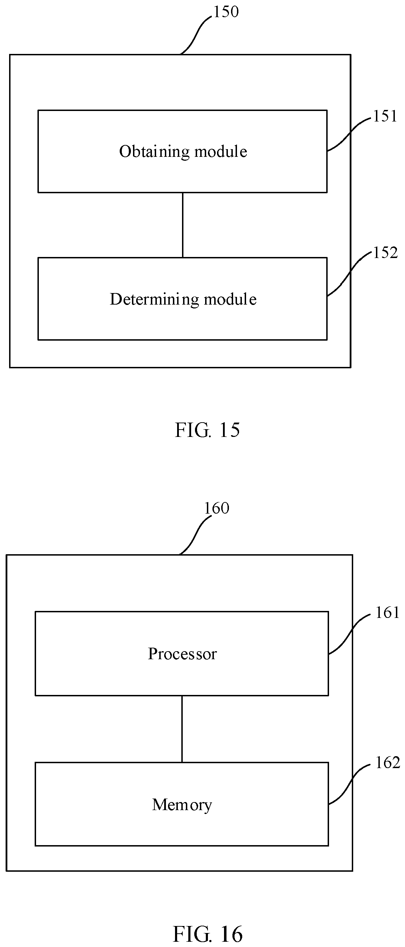

Referring to FIG. 15, FIG. 15 is a schematic structural diagram of a fourth communications network element according to some embodiments of this disclosure. The fourth communications network element 150 includes:
an obtaining module 151, configured to obtain third indication information, where the third indication information is used to indicate whether first capability identification information is present, and the first capability identification information is terminal capability identification information of a first terminal; and
a determining module 152, configured to determine, based on the third indication information, whether to obtain the first capability identification information or whether to allocate capability identification information to the first terminal.

Optionally, the obtaining module 151 is configured to obtain the third indication information from a third communications device.

Optionally, the determining module 152 is configured to obtain the first capability identification information from the third communications device when a first condition for obtaining a capability identifier is satisfied.

The first condition for obtaining a capability identifier includes at least one of the following:
the fourth communications network element does not have the first capability identification information; and
the third indication information indicates that the first capability identification information is present.

Optionally, the determining module 152 is configured to allocate terminal capability identification information to the first terminal when a first condition for allocating terminal capability identification information is satisfied.

The first condition for allocating terminal capability identification information includes at least one of the following:
the fourth communications network element does not have the first capability identification information; and
the third indication information indicates that the first capability identification information is absent.

Optionally, the fourth communications network element includes at least one of the following: a core network element and a radio access network element.

Optionally, the fourth communications network element further includes:
a transmitting module, configured to transmit the terminal capability identification information that is allocated to the first terminal.

For example, the terminal capability identification information is transmitted to the third communications device.

When the third communications device is a terminal, the fourth communications network element may be a CN element and/or a RAN element.

When the third communications device is a CN element, the fourth communications network element may be a RAN element.

When the third communications device is a RAN element, the fourth communications network element may be a CN element.

When the third communications device is a first RAN element, the fourth communications network element may be a second RAN element.

When the third communications device is a first CN element, the fourth communications network element may be a second CN element.

Referring to FIG. 16, FIG. 16 is a schematic structural diagram of a third communications device according to another embodiment of this disclosure. The third communications device 160 includes a processor 161 and a memory 162. In some embodiments of this disclosure, the third communications device 160 further includes a computer program stored in the memory 162 and capable of running on the processor 161. When the computer program is executed by the processor 161, the following step is implemented:
transmitting third indication information, where the third indication information is used to indicate whether first capability identification information is present.

The first capability identification information is terminal capability identification information of a first terminal.

Optionally, when the computer program is executed by the processor 161, the following step may also be implemented: transmitting the third indication information to a fourth communications network element.

Optionally, the third communications device includes at least one of the following: a terminal, a core network element, and a radio access network element.

According to some embodiments of this disclosure, the third communications device transmits the third indication information indicating whether the first capability identification information is present, so that a communications network element receiving the third indication information can choose, based on the third indication information, whether to obtain terminal capability identification information from the third communications device, thereby avoiding signaling overheads resulting from failed attempts in obtaining the terminal capability identification information from the third communications device or avoiding always obtaining the terminal capability identification information from the third communications device, so as to reduce signaling overheads for transmitting the terminal capability identification information.

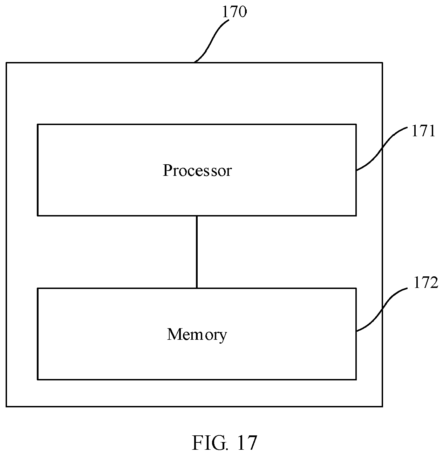

Referring to FIG. 17, FIG. 17 is a schematic structural diagram of a fourth communications network element according to another embodiment of this disclosure. The fourth communications network element 170 includes a processor 171 and a memory 172. In some embodiments of this disclosure, the third communications device 170 further includes a computer program stored in the memory 172 and capable of running on the processor 171. When the computer program is executed by the processor 171, the following steps are implemented:
obtaining third indication information, where the third indication information is used to indicate whether first capability identification information is present, and the first capability identification information is terminal capability identification information of a first terminal; and
determining, based on the third indication information, whether to obtain the first capability identification information or whether to allocate terminal capability identification information to the first terminal.

Optionally, when the computer program is executed by the processor 171, the following step may also be implemented: the obtaining the third indication information includes:
obtaining the third indication information from a third communications device.

Optionally, when the computer program is executed by the processor 171, the following step may be further implemented: the determining, based on the third indication information, whether to obtain the first capability identification information includes:
obtaining the first capability identification information from the third communications device when a first condition for obtaining a capability identifier is satisfied.

The first condition for obtaining a capability identifier includes at least one of the following:
the fourth communications network element does not have the first capability identification information; and
the third indication information indicates that the first capability identification information is present.

Optionally, when the computer program is executed by the processor 171, the following step may be further implemented: the determining, based on the third indication information, whether to allocate terminal capability identification information to the first terminal includes:
allocating the terminal capability identification information to the first terminal when a first condition for allocating terminal capability identification information is satisfied.

The first condition for allocating terminal capability identification information includes at least one of the following:
the fourth communications network element does not have the first capability identification information; and
the third indication information indicates that the first capability identification information is absent.

Optionally, the fourth communications network element includes at least one of the following: a core network element and a radio access network element.

Optionally, after the step of determining, based on the third indication information, whether to allocate terminal capability identification information to the first terminal, the following step is further included:
transmitting the terminal capability identification information that is allocated to the first terminal.

For example, the terminal capability identification information is transmitted to the third communications device.

When the third communications device is a terminal, the fourth communications network element may be a CN element and/or a RAN element.

When the third communications device is a CN element, the fourth communications network element may be a RAN element.

When the third communications device is a RAN element, the fourth communications network element may be a CN element.

When the third communications device is a first RAN element, the fourth communications network element may be a second RAN element.

When the third communications device is a first CN element, the fourth communications network element may be a second CN element.

Some embodiments of this disclosure further provide a computer-readable storage medium, where a computer program is stored in the computer-readable storage medium. When the computer program is executed by a processor, processes of the foregoing method embodiment for indicating a terminal capability are implemented, with the same technical effect achieved. To avoid repetition, details are not described herein again.

Some embodiments of this disclosure further provide a computer-readable storage medium, where a computer program is stored in the computer-readable storage medium. When the computer program is executed by a processor, processes of the foregoing method embodiment for obtaining a terminal capability are implemented, with the same technical effect achieved. To avoid repetition, details are not described herein again.

Some embodiments of this disclosure further provide a computer-readable storage medium, where a computer program is stored in the computer-readable storage medium. When the computer program is executed by a processor, processes of the foregoing method embodiment for indicating a terminal capability identifier are implemented, with the same technical effect achieved. To avoid repetition, details are not described herein again.

Some embodiments of this disclosure further provide a computer-readable storage medium, where a computer program is stored in the computer-readable storage medium. When the computer program is executed by a processor, processes of the foregoing method embodiment for obtaining a terminal capability identifier are implemented, with the same technical effect achieved. To avoid repetition, details are not described herein again.

The computer-readable storage medium is, for example, a read-only memory (Read-Only Memory, ROM), a random access memory (Random Access Memory, RAM), a magnetic disk, or an optical disc.

It should be noted that the terms "include", "comprise", or any of their variants are intended to cover a non-exclusive inclusion, such that a process, a method, an article, or an apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element.

According to the foregoing description of the implementations, a person skilled in the art may clearly understand that the methods in the foregoing embodiments may be implemented by using software in combination with a necessary common hardware platform, and certainly may alternatively be implemented by using hardware. However, in most cases, the former is a preferred implementation. Based on such an understanding, the technical solutions of this disclosure essentially or the part contributing to the prior art may be implemented in a form of a software product. The software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this disclosure.

The foregoing describes the embodiments of this disclosure with reference to the accompanying drawings. However, this disclosure is not limited to the foregoing specific implementation manners. The foregoing specific implementation manners are merely illustrative rather than restrictive. As instructed by this disclosure, persons of ordinary skill in the art may develop many other manners without departing from principles of this disclosure and the protection scope of the claims, and all such manners fall within the protection scope of this disclosure.

## Claims

1. A method for indicating a terminal capability, applied to a first communications network element and comprising:
transmitting first information to a second communications network element, wherein the first information comprises at least one of the following: first capability identification information, first indication information, and second indication information; wherein
the first capability identification information is terminal capability identification information of a first terminal;
the first indication information is used to indicate whether a terminal capability mapped to the first capability identification information is present, or the first indication information is used to indicate that a terminal capability mapped to the first capability identification information is present, or the first indication information is used to indicate that a terminal capability mapped to the first capability identification information is absent; and
the second indication information is used to indicate whether a terminal capability of the first terminal is present, or the second indication information is used to indicate that a terminal capability of the first terminal is present, or the second indication information is used to indicate that a terminal capability of the first terminal is absent.

2. The method for indicating a terminal capability according to claim 1, wherein when the first indication information is used to indicate whether the terminal capability mapped to the first capability identification information is present, the first capability identification information is in one-to-one correspondence to the first indication information; and/or
when the first indication information is used to indicate that the terminal capability mapped to the first capability identification information is absent, second capability identification information is in one-to-one correspondence to the first indication information; and/or
when the first indication information is used to indicate that the terminal capability mapped to the first capability identification information is present, third capability identification information is in one-to-one correspondence to the first indication information; and/or
when the first indication information is used to indicate that the terminal capability mapped to the first capability identification information is absent, and when the second capability identification information comprises at least two pieces of terminal capability identification information of the first terminal, all the second capability identification information corresponds to one piece of first indication information; and/or
when the first indication information is used to indicate that the terminal capability mapped to the first capability identification information is present, and when the third capability identification information comprises at least two pieces of terminal capability identification information of the first terminal, all the third capability identification information corresponds to one piece of first indication information; wherein
the second capability identification information is terminal capability identification information of a mapped terminal capability that is absent in the first capability identification information, and the third capability identification information is terminal capability identification information of a mapped terminal capability that is present in the first capability identification information.

3. The method for indicating a terminal capability according to claim 1, wherein before the transmitting first information to a second communications network element, at least one of the following is further executed:
receiving the first capability identification information that is reported by the first terminal or transmitted by another communications network element;
determining the first indication information and/or the second indication information based on whether the terminal capability mapped to the first capability identification information is present or acquirable;
allocating the first capability identification information to the terminal capability of the first terminal based on the terminal capability of the first terminal;
establishing a mapping relationship between the first capability identification information and the terminal capability based on the terminal capability of the first terminal; and
determining the first capability identification information of the first terminal based on the terminal capability of the first terminal and a mapping relationship between a terminal capability and terminal capability identification information.

4. The method for indicating a terminal capability according to any one of claims 1 to 3, wherein
the first communications network element is a core network CN element, and the second communications network element is a radio access network RAN element; or
the first communications network element is a first RAN element that has the terminal capability of the first terminal, and the second communications network element is a second RAN element that obtains the terminal capability of the first terminal; or
the first communications network element is a first CN element that has the terminal capability of the first terminal, and the second communications network element is a second CN element that obtains the terminal capability of the first terminal.

5. A method for obtaining a terminal capability, applied to a second communications network element and comprising:
obtaining first information from a first communications network element, wherein the first information comprises at least one of the following: first capability identification information, first indication information, and second indication information; wherein
the first capability identification information is terminal capability identification information of a first terminal; and the first indication information is used to indicate whether a terminal capability mapped to the first capability identification information is present, or the first indication information is used to indicate that a terminal capability mapped to the first capability identification information is present, or the first indication information is used to indicate that a terminal capability mapped to the first capability identification information is absent; and
the second indication information is used to indicate whether a terminal capability of the first terminal is present, or the second indication information is used to indicate that a terminal capability of the first terminal is present, or the second indication information is used to indicate that a terminal capability of the first terminal is absent; and
obtaining the terminal capability of the first terminal based on the first information.

6. The method for obtaining a terminal capability according to claim 5, wherein
when the first indication information is used to indicate whether the terminal capability mapped to the first capability identification information is present, the first capability identification information is in one-to-one correspondence to the first indication information; and/or
when the first indication information is used to indicate that the terminal capability mapped to the first capability identification information is absent, second capability identification information is in one-to-one correspondence to the first indication information; and/or
when the first indication information is used to indicate that the terminal capability mapped to the first capability identification information is present, third capability identification information is in one-to-one correspondence to the first indication information; and/or
when the first indication information is used to indicate that the terminal capability mapped to the first capability identification information is absent, and when the second capability identification information comprises at least two pieces of terminal capability identification information of the first terminal, all the second capability identification information corresponds to one piece of first indication information; and/or
when the first indication information is used to indicate that the terminal capability mapped to the first capability identification information is present, and when the third capability identification information comprises at least two pieces of terminal capability identification information of the first terminal, all the third capability identification information corresponds to one piece of first indication information; wherein
the second capability identification information is terminal capability identification information of a mapped terminal capability that is absent in the first capability identification information, and the third capability identification information is terminal capability identification information of a mapped terminal capability that is present in the first capability identification information.

7. The method for obtaining a terminal capability according to claim 5 or 6, wherein the obtaining the terminal capability of the first terminal based on the first information comprises:
when a first condition is satisfied, obtaining the terminal capability of the first terminal from the first communications network element, or obtaining, from the first communications network element, the terminal capability mapped to the first capability identification information; wherein
the first condition comprises at least one of the following:
the second communications network element does not have the terminal capability mapped to the first capability identification information;
the second communications network element does not have the terminal capability of the first terminal;
the first information comprises the first indication information, and the first indication information indicates that the terminal capability mapped to the first capability identification information is present; and
the first information comprises the second indication information, and the second indication information indicates that the terminal capability of the first terminal is present.

8. The method for obtaining a terminal capability according to claim 5 or 6, wherein the obtaining the terminal capability of the first terminal based on the first information comprises:
when a second condition is satisfied, obtaining the terminal capability of the first terminal from a second terminal, or obtaining, from a second terminal, the terminal capability mapped to the first capability identification information, wherein the second terminal is the first terminal or a terminal other than the first terminal; and
the second condition comprises at least one of the following:
the second communications network element does not have the terminal capability mapped to the first capability identification information;
the second communications network element does not have the terminal capability of the first terminal;
the first information comprises the first indication information, and the first indication information indicates that the terminal capability mapped to the first capability identification information is absent;
the first information does not comprise the first indication information;
the first information comprises the second indication information, and the second indication information indicates that the terminal capability of the first terminal is absent; and
the first information does not comprise the second indication information.

9. The method for obtaining a terminal capability according to claim 5 or 6, wherein the obtaining the terminal capability of the first terminal based on the first information comprises:
when a third condition is satisfied, obtaining, from the first communications network element, a terminal capability mapped to third capability identification information, wherein when the first capability identification information comprises at least two pieces of terminal capability identification information of the first terminal, the third capability identification information is terminal capability identification information of a mapped terminal capability that is present in the first capability identification information; and
the third condition comprises at least one of the following:
the second communications network element does not have the terminal capability mapped to the third capability identification information;
the first information comprises the first indication information, and the first indication information indicates that the terminal capability mapped to the third capability identification information is present; and
the first information does not comprise first indication information corresponding to the third capability identification information, and when the first indication information corresponding to the third capability identification information does not exist, the first information indicates by default that the third capability identification information has a mapped terminal capability.

10. The method for obtaining a terminal capability according to claim 5 or 6, wherein the obtaining the terminal capability of the first terminal based on the first information comprises:
when a fourth condition is satisfied, obtaining, from a second terminal, a terminal capability mapped to the second capability identification information, wherein the second terminal is the first terminal or a terminal other than the first terminal; and when the first capability identification information comprises at least two pieces of terminal capability identification information of the first terminal, the second capability identification information is terminal capability identification information of a mapped terminal capability that is absent in the first capability identification information; and
the fourth condition comprises at least one of the following:
the second communications network element does not have the terminal capability mapped to the second capability identification information;
the first information comprises the first indication information, and the first indication information indicates that the terminal capability mapped to the second capability identification information is absent; and
the first information does not comprise first indication information corresponding to the second capability identification information, and when the first indication information corresponding to the second capability identification information does not exist, the first information indicates by default that the second capability identification information does not have a mapped terminal capability.

11. The method for obtaining a terminal capability according to claim 5 or 6, wherein
the first communications network element is a CN element, and the second communications network element is a RAN element; or
the first communications network element is a first RAN element that has the terminal capability of the first terminal, and the second communications network element is a second RAN element that obtains the terminal capability of the first terminal; or
the first communications network element is a first CN element that has the terminal capability of the first terminal, and the second communications network element is a second CN element that obtains the terminal capability of the first terminal.

12. A first communications network element, comprising:
a transmitting module, configured to transmit first information to a second communications network element, wherein the first information comprises at least one of the following: first capability identification information, first indication information, and second indication information; wherein
the first capability identification information is terminal capability identification information of a first terminal;
the first indication information is used to indicate whether a terminal capability mapped to the first capability identification information is present, or the first indication information is used to indicate that a terminal capability mapped to the first capability identification information is present, or the first indication information is used to indicate that a terminal capability mapped to the first capability identification information is absent; and
the second indication information is used to indicate whether a terminal capability of the first terminal is present, or the second indication information is used to indicate that a terminal capability of the first terminal is present, or the second indication information is used to indicate that a terminal capability of the first terminal is absent.

13. A second communications network element, comprising:
a first obtaining module, configured to obtain first information from a first communications network element, wherein the first information comprises at least one of the following: first capability identification information, first indication information, and second indication information; the first capability identification information is terminal capability identification information of a first terminal; the first indication information is used to indicate whether a terminal capability mapped to the first capability identification information is present, or the first indication information is used to indicate that a terminal capability mapped to the first capability identification information is present, or the first indication information is used to indicate that a terminal capability mapped to the first capability identification information is absent; and the second indication information is used to indicate whether a terminal capability of the first terminal is present, or the second indication information is used to indicate that a terminal capability of the first terminal is present, or the second indication information is used to indicate that a terminal capability of the first terminal is absent; and
a second obtaining module, configured to obtain the terminal capability of the first terminal based on the first information.

14. A first communications network element, comprising a processor, a memory, and a computer program stored in the memory and capable of running on the processor, wherein when the computer program is executed by the processor, the steps of the method for indicating a terminal capability according to any one of claims 1 to 4 are implemented.

15. A second communications network element, comprising a processor, a memory, and a computer program stored in the memory and capable of running on the processor, wherein when the computer program is executed by the processor, the steps of the method for obtaining a terminal capability according to any one of claims 5 to 11 are implemented.

16. A method for indicating a terminal capability identifier, applied to a third communications device and comprising:
transmitting third indication information, wherein the third indication information is used to indicate whether first capability identification information is present; and
the first capability identification information is terminal capability identification information of a first terminal.

17. The method for indicating a terminal capability identifier according to claim 16, wherein
the third indication information is transmitted to a fourth communications network element.

18. The method for indicating a terminal capability identifier according to claim 16, wherein
the third communications device comprises at least one of the following: a terminal, a core network element, and a radio access network element.

19. A method for obtaining a terminal capability identifier, applied to a fourth communications network element and comprising:
obtaining third indication information, wherein the third indication information is used to indicate whether first capability identification information is present, and the first capability identification information is terminal capability identification information of a first terminal; and
determining, based on the third indication information, whether to obtain the first capability identification information or whether to allocate terminal capability identification information to the first terminal.

20. The method for obtaining a terminal capability identifier according to claim 19, wherein the obtaining third indication information comprises:
obtaining the third indication information from a third communications device.

21. The method for obtaining a terminal capability identifier according to claim 20, wherein the determining, based on the third indication information, whether to obtain the first capability identification information comprises:
obtaining the first capability identification information from the third communications device when a first condition for obtaining a capability identifier is satisfied, wherein
the first condition for obtaining a capability identifier comprises at least one of the following:
the fourth communications network element does not have the first capability identification information; and
the third indication information indicates that the first capability identification information is present.

22. The method for obtaining a terminal capability identifier according to claim 19, wherein the determining, based on the third indication information, whether to allocate terminal capability identification information to the first terminal comprises:
allocating the terminal capability identification information to the first terminal when a first condition for allocating terminal capability identification information is satisfied; wherein
the first condition for allocating terminal capability identification information comprises at least one of the following:
the fourth communications network element does not have the first capability identification information; and
the third indication information indicates that the first capability identification information is absent.

23. The method for obtaining a terminal capability identifier according to claim 19, wherein
the fourth communications network element comprises at least one of the following: a core network element and a radio access network element.

24. A third communications device, comprising:
a transmitting module, configured to transmit third indication information, wherein the third indication information is used to indicate whether first capability identification information is present; and
the first capability identification information is terminal capability identification information of a first terminal.

25. A fourth communications network element, comprising:
an obtaining module, configured to obtain third indication information, wherein the third indication information is used to indicate whether first capability identification information is present, and the first capability identification information is terminal capability identification information of a first terminal; and
a determining module, configured to determine, based on the third indication information, whether to obtain the first capability identification information or whether to allocate capability identification information to the first terminal.

26. A third communications device, comprising a processor, a memory, and a computer program stored in the memory and capable of running on the processor, wherein when the computer program is executed by the processor, the steps of the method for indicating a terminal capability identifier according to any one of claims 16 to 18 are implemented.

27. A fourth communications network element, comprising a processor, a memory, and a computer program stored in the memory and capable of running on the processor, wherein when the computer program is executed by the processor, the steps of the method for indicating a terminal capability identifier according to any one of claims 19 to 23 are implemented.

28. A computer-readable storage medium, wherein the computer-readable storage medium stores a computer program, and when the computer program is executed by a processor, the steps of the method for indicating a terminal capability according to any one of claims 1 to 4 are implemented, or when the computer program is executed by a processor, the steps of the method for obtaining a terminal capability according to any one of claims 5 to 12 are implemented, or when the computer program is executed by a processor, the steps of the method for indicating a terminal capability identifier according to any one of claims 16 to 18 are implemented, or when the computer program is executed by a processor, the steps of the method for obtaining a terminal capability identifier according to any one of claims 19 to 23 are implemented.
